(19) Europäisches Patentamt
European Patent Office
Office européen des brevets

(11) EP 4 579 852 A1

(12) **EUROPEAN PATENT APPLICATION**
published in accordance with Art. 153(4) EPC

(43) Date of publication:
**02.07.2025 Bulletin 2025/27**

(21) Application number: **23857448.7**

(22) Date of filing: **25.08.2023**

(51) International Patent Classification (IPC):
***H01M 10/0567*** *(2010.01)* ***H01M 4/131*** *(2010.01)*
***H01M 4/505*** *(2010.01)* ***H01M 4/525*** *(2010.01)*
***H01M 10/052*** *(2010.01)* ***H01M 10/0525*** *(2010.01)*

(52) Cooperative Patent Classification (CPC):
**H01M 4/131; H01M 4/505; H01M 4/525; H01M 10/052; H01M 10/0525; H01M 10/0567;**
Y02E 60/10

(86) International application number:
**PCT/JP2023/030786**

(87) International publication number:
**WO 2024/043340 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.08.2022 JP 2022135417**

(71) Applicant: **Central Glass Company, Limited**
**Ube-shi, Yamaguchi 755-0001 (JP)**

(72) Inventors:
- **YAMAZAWA, Sho**
  **Tokyo 101-0054 (JP)**
- **ITABASHI, Saori**
  **Tokyo 101-0054 (JP)**
- **ENDO, Yusuke**
  **Tokyo 101-0054 (JP)**
- **SUZUKI, Katsutoshi**
  **Tokyo 101-0054 (JP)**
- **TAKEDA, Kazunari**
  **Tokyo 101-0054 (JP)**

(74) Representative: **Manitz Finsterwald**
**Patent- und Rechtsanwaltspartnerschaft mbB**
**Martin-Greif-Strasse 1**
**80336 München (DE)**

# (54) LITHIUM ION SECONDARY BATTERY

(57) The present disclosure provides a lithium ion secondary battery, in which surface roughness (Ra) of a surface of a positive electrode active material layer containing a positive electrode active material is less than $1.0 \times 10^4$ Å, and the lithium ion secondary battery includes a nonaqueous electrolyte solution containing at least one selected from the group consisting of compounds of Formulas (1) to (10) described in the specification.

*FIG. 2*

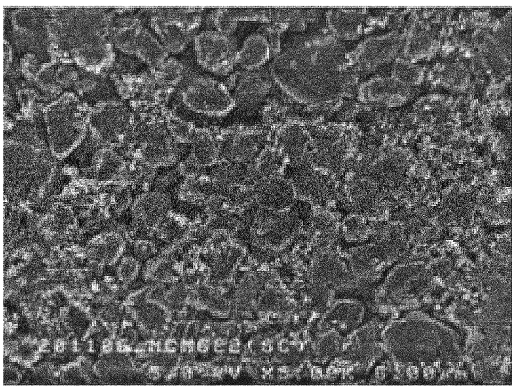

EP 4 579 852 A1

## Description

TECHNICAL FIELD

The present disclosure relates to a lithium ion secondary battery.

BACKGROUND ART

In recent years, lithium ion secondary batteries are attracting attention as power storage systems for information-related devices and communication devices, that is, power storage systems for compact and high-energy-density applications such as personal computers, video cameras, digital still cameras, and mobile phones and power storage systems for large-scale power applications such as electric vehicles, hybrid vehicles, auxiliary power sources for fuel cell vehicles, and power storage. In the present disclosure, a secondary battery that is charged and discharged by moving of lithium ions between a positive electrode and a negative electrode is referred to as a "lithium ion secondary battery".
In order to achieve good cycling stability of a lithium ion secondary battery, a monolithic positive electrode active material with a small surface area and high particle mechanical strength is used (Patent Literatures 1 and 2).

CITATION LIST

PATENT LITERATURE

Patent Literature 1: JP2021-507486A
Patent Literature 2: JP2021-508410A

SUMMARY OF INVENTION

TECHNICAL PROBLEM

One kind of performance required for a lithium ion secondary battery is an improvement of a cycle characteristic at a high temperature. As described above, when the monolithic positive electrode active material is used, a lithium ion secondary battery with good cycling stability can be obtained, but in the above Patent Literatures 1 and 2, the cycling stability at a high temperature exceeding 50°C is not studied.
Furthermore, the inventors of the present invention have found that when a (monolithic) material containing primary particles as described in Patent Literatures 1 and 2 is used as the positive electrode active material, rate performance at a low temperature (0°C) may be lower than that when a (non-monolithic) material containing secondary particles obtained by agglomerating the primary particles is used.
Therefore, a problem of the present disclosure is to provide a lithium ion secondary battery which exhibits a good cycle characteristic under severe conditions (for example, a high-temperature condition exceeding 50°C) and can prevent a decrease in rate performance at a low temperature (0°C) even when a monolithic material is used as a positive electrode active material.

SOLUTION TO PROBLEM

As a result of an intensive research in light of such a problem, the inventors of the present invention have found that in a lithium ion secondary battery including a positive electrode, a negative electrode, and a nonaqueous electrolyte solution, by setting a surface of the positive electrode to specific surface roughness (Ra) and using the nonaqueous electrolyte solution containing a specific additive, both a high-temperature cycle characteristic and low-temperature rate performance are excellent, and have achieved the present disclosure.
That is, the present disclosure is as follows.

[1] A lithium ion secondary battery, in which

surface roughness (Ra) of a surface of a positive electrode active material layer containing a positive electrode active material is less than $1.0 \times 10^4$ Å, and
the lithium ion secondary battery includes a nonaqueous electrolyte solution containing at least one selected from the group consisting of compounds of the following Formulas (1) to (10).

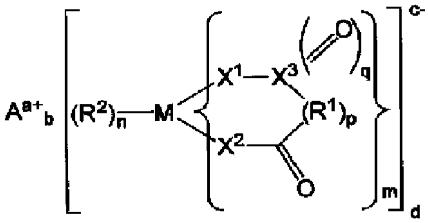

(1)

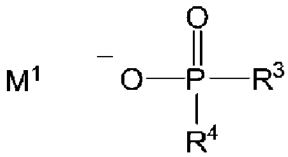

(2)

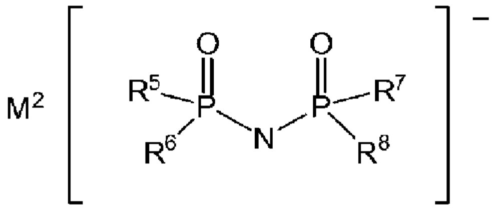

(3)

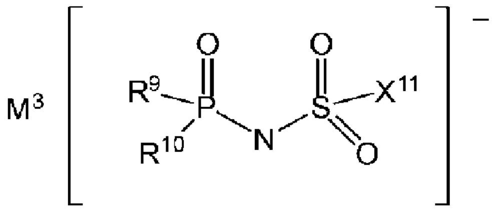

(4)

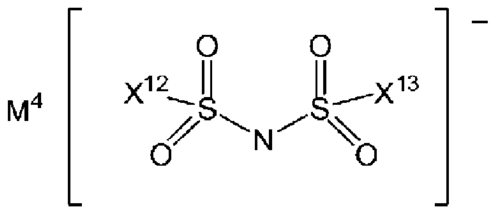

(5)

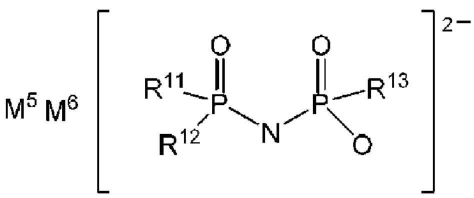

(6)

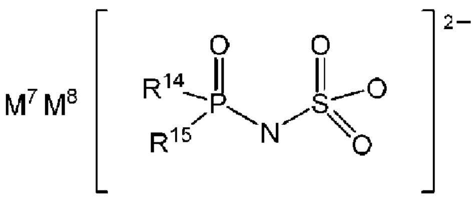

(7)

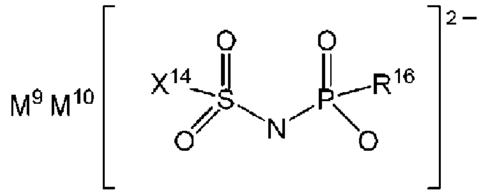

(8)

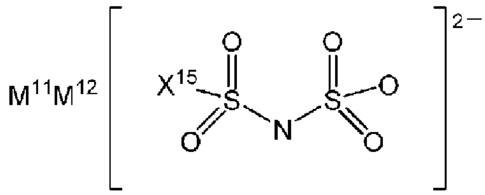

(9)

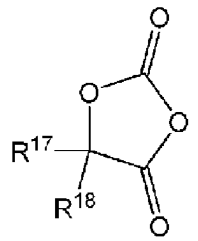

(10)

In Formula (1), M represents a boron atom, a phosphorus atom, or a silicon atom, m is 1 or 2;

n is 2 or 4;
p is 0 or 1;
when p is 0, $R^1$ does not exist, and $X^3$ and the carbonyl group described at adjacent positions of $R^1$ are directly bonded;
$R^1$ represents an alkylene group having 1 to 10 carbon atoms, a halogenated alkylene group having 1 to 10 carbon atoms, an alkenylene group having 2 to 10 carbon atoms, a halogenated alkenylene group having 2 to 10 carbon atoms, an arylene group having 6 to 20 carbon atoms, or a halogenated arylene group having 6 to 20 carbon atoms (these groups may contain a substituent or a heteroatom in structures thereof. When m is 2 or more, m of $R^1$'s may be bonded to each other);
$R^2$ represents a halogen atom;
$X^1$ and $X^2$ each independently represent an oxygen atom or a sulfur atom, and $X^3$ represents a carbon atom or a sulfur atom;
q is 1 when $X^3$ is a carbon atom, and is 1 or 2 when $X^3$ is a sulfur atom;
$A^{a+}$ represents an alkali metal cation, an alkaline earth metal cation, or an onium cation; and
a represents a valence number of the corresponding cation, each of a, b, c, and d is 1 or 2, and satisfies $a \times b = c \times d$,
in Formulas (2) to (4) and (6) to (8), $R^3$ to $R^{16}$ each independently represent a fluorine atom or an organic group selected from a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and the organic group may contain a fluorine atom, an oxygen atom, or an unsaturated bond;
in Formulas (4), (5), (8), and (9), $X^{11}$ to $X^{15}$ each independently represent a fluorine atom or an organic group selected from a linear or branched alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and the organic group may contain a fluorine atom, an oxygen atom, or an unsaturated bond,
each of Formulas (2) to (9) includes at least one bond selected from the group consisting of a P-F bond and an S-F bond. In Formulas (2) to (9), $M^1$ to $M^{12}$ each independently represent a proton, a metal cation, or an onium cation, and in Formula (10), $R^{17}$ to $R^{18}$ each independently represent a hydrogen atom, a fluorine atom, or an organic group selected from a linear or branched alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl

group having 3 to 10 carbon atoms, an aryl group having 6 to 10 carbon atoms, a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and the organic group may contain a fluorine atom, an oxygen atom, or an unsaturated bond.

[2] The lithium ion secondary battery according to [1], in which the nonaqueous electrolyte solution further contains at least one selected from the group consisting of a cyclic carbonate compound, a Si-containing compound, and a sulfate ester compound.

[3] The lithium ion secondary battery according to [1] or [2], in which a total content of the at least one selected from the group consisting of the compounds of Formulas (1) to (10) is 0.001% to 10% by mass with respect to a total amount of the nonaqueous electrolyte solution.

[4] The lithium ion secondary battery according to any one of [1] to [3], in which when the surface of the positive electrode active material layer is observed with an electron microscope at 5,000× magnification, the primary particles of the positive electrode active material constitute 70% or more of the number of particles in a field of view of 17,000 nm × 23,000 nm.

[5] The lithium ion secondary battery according to [4], in which the primary particles include a primary particle having a particle size range of 7 to 12 μm and a primary particle having a particle size range of 1 μm or more and less than 7 μm.

[6] The lithium ion secondary battery according to any one of [1] to [5], in which the positive electrode active material is a lithium-containing transition metal composite oxide.

[7] The lithium ion secondary battery according to [6], in which the lithium-containing transition metal composite oxide contains at least one of nickel, cobalt, and manganese.

[8] The lithium ion secondary battery according to any one of [1] to [7], in which a charge potential is 4.4 V or more.

[9] The lithium ion secondary battery according to any one of [1] to [8], in which the positive electrode active material layer further contains a conductive aid and a binder.

ADVANTAGEOUS EFFECTS OF INVENTION

According to the present disclosure, a lithium ion secondary battery that exhibits a good cycle characteristic under severe conditions (for example, a high-temperature condition exceeding 50°C) and can prevent a decrease in rate performance at a low temperature (0°C) can be provided.

BRIEF DESCRIPTION OF DRAWINGS

FIG. 1 is an SEM image of a surface of a positive electrode body produced by using a non-monolithic polycrystalline positive electrode active material according to Comparative Example 2.
FIG. 2 is an SEM image of a surface of a positive electrode body produced by using a monolithic positive electrode active material according to Example 1.
FIG. 3 is a graph showing results of an evaluation of low-temperature (0°C) rate performance in Example 1 and Comparative Examples 1, 2, and 5.

DESCRIPTION OF EMBODIMENTS

Hereinafter, each embodiment of the present disclosure will be described. However, the present disclosure can be carried out in various aspects without departing from the gist thereof, and should not be construed as being limited to the description of the embodiments or Examples illustrated below. In addition, among other actions and effects different from the actions and effects brought about by the following embodiments or the aspects of Examples, the actions and effects

obvious from the description of the present specification or the actions and effects easily predicted by a person skilled in the art are construed as being brought about by the present disclosure.

Ranges expressed with "to" in the present specification mean ranges including numerical values indicated before and after "to" as a lower limit value and an upper limit value.

In the present specification, a positive electrode active material being a "monolithic material" refers to a form in which the positive electrode active material contained in a positive electrode active material layer essentially includes only primary particles.

Hereinafter, a positive electrode using the monolithic material as the positive electrode active material may be referred to as a "single crystal positive electrode", and a positive electrode using a non-monolithic material as the positive electrode active material may be described as a "polycrystalline positive electrode".

A lithium ion secondary battery according to the present disclosure, in which

surface roughness (Ra) of a surface of a positive electrode active material layer containing a positive electrode active material is less than $1.0 \times 10^4$ Å, and
the lithium ion secondary battery includes a nonaqueous electrolyte solution containing at least one selected from the group consisting of compounds of the following Formulas (1) to (10).

In the lithium ion secondary battery according to the present disclosure, the surface roughness of the surface of the positive electrode active material layer is less than $1.0 \times 10^4$ Å. Although details of a mechanism are unclear, it is speculated that the positive electrode active material contained in the positive electrode includes a single crystal (monolithic) material as a main component, and thus a volume change of particles accompanying charge and discharge tends to occur in a uniform direction, and occurrence of microcracks can be prevented, and therefore a cycle characteristic is excellent even in a high-temperature environment.

On the other hand, a particle size of the primary particles of the positive electrode active material is larger in the single crystal (monolithic) material than in the polycrystalline (non-monolithic) material. In the case of the polycrystalline, the primary particles with fine particle sizes aggregate to form secondary particles. That is, it is considered that when the single crystal positive electrode using the monolithic material as the positive electrode active material is used, the number of particles present on a surface of an electrode is smaller than that when the polycrystalline positive electrode is used, which results in a decrease in a conductive path, and low-temperature rate performance decreases. Here, the lithium ion secondary battery according to the present disclosure contains the compounds of Formulas (1) to (10) in the nonaqueous electrolyte solution. The compound of Formula (1) has a bond between a halogen atom and a phosphorus atom, a silicon atom, or a boron atom, and each of the compounds of Formulas (2) to (9) has a bond between a fluorine atom and a phosphorus atom or a sulfur atom. The compound of Formula (10) has a cyclic structure having a -O-(C=O)-O-(C=O)- bond. A part of the compound having the above specific bond or structure decomposes on the positive electrode and a negative electrode to form a coating with good ion conductivity on surfaces of the positive electrode and the negative electrode. It is speculated that this coating forms a conductive path, which allows smooth movement of lithium ions and prevents the decrease in low-temperature rate performance. It is speculated that the addition of the above compounds forms the coating on the surfaces of the electrodes, so that decomposition of other components such as a solvent on the surfaces of the electrodes is prevented, thereby preventing formation of a high-resistance coating, and a cycle characteristic under severe conditions is further improved.

Hereinafter, each component of the lithium ion secondary battery according to the present embodiment will be described in detail.

[Nonaqueous Electrolyte Solution]

[(I) At Least One Compound Selected from Group Consisting of Compounds of Formulas (1) to (10)]

The nonaqueous electrolyte solution in the lithium ion secondary battery according to the present disclosure contains at least one compound selected from the group consisting of the compounds of Formulas (1) to (10) (hereinafter, also referred to as (I) or compound (I)).

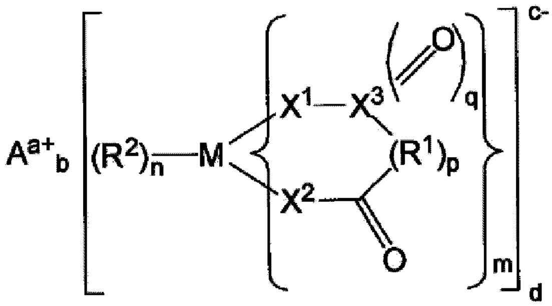

(1)

In Formula (1), M represents a boron atom, a phosphorus atom, or a silicon atom, m is 1 or 2, n is 2 or 4, and p is 0 or 1. When p is 0, $R^1$ does not exist, and $X^3$ and a carbonyl group described at adjacent positions of $R^1$ are directly bonded. $R^1$ represents an alkylene group having 1 to 10 carbon atoms, a halogenated alkylene group having 1 to 10 carbon atoms, an alkenylene group having 2 to 10 carbon atoms, a halogenated alkenylene group having 2 to 10 carbon atoms, an arylene group having 6 to 20 carbon atoms, or a halogenated arylene group having 6 to 20 carbon atoms (these groups may contain a substituent or a heteroatom in structures thereof. When m is 2 or more, m of $R^1$'s may be bonded to each other), $R^2$ represents a halogen atom, $X^1$ and $X^2$ each independently represent an oxygen atom or a sulfur atom, and $X^3$ represents a carbon atom or a sulfur atom. q is 1 when $X^3$ is a carbon atom, and is 1 or 2 when $X^3$ is a sulfur atom. $A^{a+}$ represents an alkali metal cation, an alkaline earth metal cation, or an onium cation, and a represents a valence number of the corresponding cation. Each of a, b, c, and d is 1 or 2, and satisfies $a \times b = c \times d$.

In the above Formula (1), examples of the alkylene group of $R^1$ include an alkylene group having 1 to 10 carbon atoms, such as a methylene group, an ethylene group, a propylene group, an isopropylene group, a butylene group, an isobutylene group, and a pentylene group.

Examples of the halogenated alkylene group include a halogenated alkylene group having 1 to 10 carbon atoms, such as a difluoromethylene group, a 2,2-difluoroethylene group, and a 2,2,3,3-tetrafluoropropylene group.

Examples of the alkenylene group include an alkenylene group having 2 to 10 carbon atoms, such as a vinylene group, a 1-propenylene group, a 2-propenylene group, an isopropenylene group, a 2-butenylene group, a 3-butenylene group, and a 1,3-butadienylene group.

Examples of the halogenated alkenylene group include a halogenated alkenylene group having 2 to 10 carbon atoms, such as a difluorovinylene group.

Examples of the arylene group include an arylene group having 6 to 20 carbon atoms, such as a phenylene group, a tolylene group, and a xylylene group.

Examples of the halogenated arylene group include an arylene group having 6 to 20 carbon atoms, such as a fluorinated phenylene group.

$R^1$ is preferably an alkylene group having 1 to 10 carbon atoms or an alkenylene group having 2 to 10 carbon atoms, and more preferably a methylene group or a vinylene group.

In the above Formula (1), examples of the halogen atom represented by $R^2$ include a fluorine atom, a chlorine atom, and a bromine atom.

$R^2$ is preferably a fluorine atom.

In the above Formula (1), it is important for improving the low-temperature rate performance that at least one of a halogen atom-boron atom bond, a halogen atom-phosphorus atom bond, and a halogen atom-silicon atom bond is contained.

Examples of the compound of the above Formula (1) include difluoro(oxalato)borate, difluorobis(oxalato)phosphate, tetrafluoro(oxalato)phosphate, difluorobis(oxalato)silicate, tetrafluoro(malonato)phosphate, difluoro(sulfonoacetato)borate, difluoro(maleato)borate, and difluoro(fumarato)borate. Among these, from viewpoints of solubility in an electrolyte solution and thermal stability at a high temperature, the compound of the above Formula (1) is preferably at least one salt selected from the group consisting of difluoro(oxalato)borate, difluorobis(oxalato)phosphate, tetrafluoro(oxalato)phosphate, and tetrafluoro(malonato)phosphate.

A counter cation ($A^{a+}$ in the above Formula (1)) in the above compound is an alkali metal cation, an alkaline earth metal cation, or an onium cation. Among these, a lithium ion, a sodium ion, a potassium ion, a tetraalkylammonium ion, or a tetraalkylphosphonium ion is preferable, and a lithium ion is more preferable, from viewpoints of the solubility in an electrolyte solution and ionic conductivity.

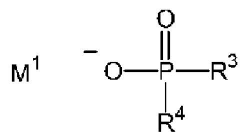

(2)

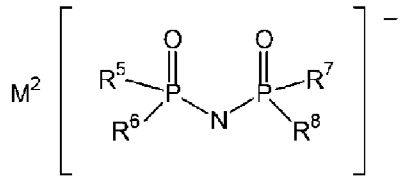

(3)

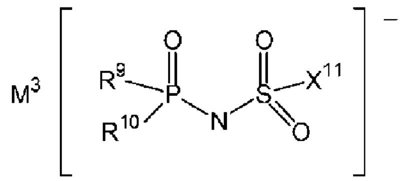

(4)

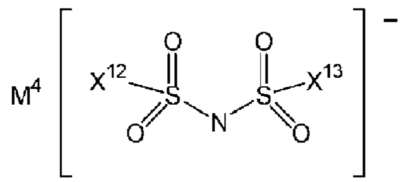

(5)

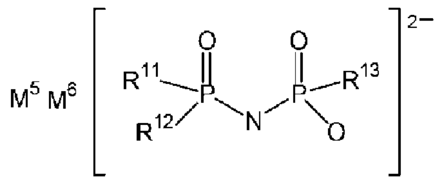

(6)

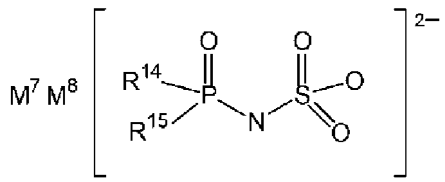

(7)

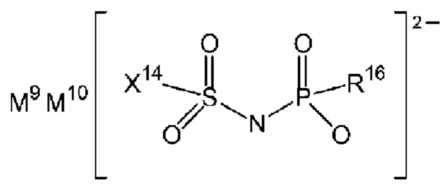

(8)

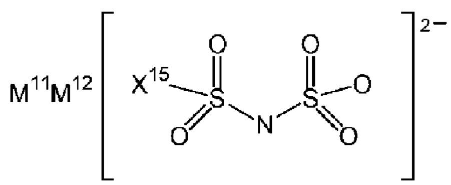

(9)

In Formulas (2) to (4) and (6) to (8), $R^3$ to $R^{16}$ each independently represent a fluorine atom or an organic group selected from a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a

cycloalkenyloxy group having 3 to 10 carbon atoms, and an aryloxy group having 6 to 10 carbon atoms, and the organic group may contain a fluorine atom, an oxygen atom, or an unsaturated bond. In Formulas (4), (5), (8), and (9), $X^{11}$ to $X^{15}$ each independently represent a fluorine atom or an organic group selected from a linear or branched alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and the organic group may contain a fluorine atom, an oxygen atom, or an unsaturated bond. Each of Formulas (2) to (9) includes at least one bond selected from the group consisting of a P-F bond and an S-F bond. In Formulas (2) to (9), $M^1$ to $M^{12}$ each independently represent a proton, a metal cation, or an onium cation.

In the above Formulas (2) to (9), it is important for improving the low-temperature rate performance that at least one bond selected from the P-F bond and the S-F bond is contained. The more P-F bonds and S-F bonds there are, the more excellent low-temperature rate performance can be obtained, which is preferable.

In the above Formulas (2) to (9), examples of the cation represented by $M^1$ to $M^{12}$ include a proton, a metal cation, and an onium cation. There are no particular limitations on the type of the cation, and various cations can be selected from the above, as long as the cations do not impair the performance of the lithium ion secondary battery according to the present disclosure. Specific examples include a metal cation such as lithium, sodium, potassium, rubidium, cesium, magnesium, calcium, barium, silver, copper, and iron, and an onium cation such as tetraalkylammonium, tetraalkylphosphonium, and an imidazolium derivative. From a viewpoint of helping ionic conductance in the lithium ion secondary battery, a lithium ion, a sodium ion, a potassium ion, a tetramethylammonium ion, a tetraethylammonium ion, and a tetrabutylphosphonium ion are preferable, and a lithium ion is more preferable.

Examples of the alkoxy group represented by $R^3$ to $R^{16}$ in the above Formulas (2) to (4) and (6) to (8) include a fluorine-containing alkoxy group and an alkoxy group having 1 to 10 carbon atoms, such as a methoxy group, an ethoxy group, a propoxy group, an isopropoxy group, a butoxy group, a sec-butoxy group, a tert-butoxy group, a pentyloxy group, a trifluoromethoxy group, a 2,2-difluoroethoxy group, a 2,2,2-trifluoroethoxy group, a 2,2,3,3-tetrafluoropropoxy group, a 1,1,1-trifluoroisopropoxy group, and a 1,1,1,3,3,3-hexafluoroisopropoxy group.

Examples of the alkenyloxy group include a fluorine-containing alkenyloxy group and an alkenyloxy group having 2 to 10 carbon atoms, such as a vinyloxy group, a 1-propenyloxy group, a 2-propenyloxy group, an isopropenyloxy group, a 2-butenyloxy group, a 3-butenyloxy group, and a 1,3-butadienyloxy group.

Examples of the alkynyloxy group include a fluorine-containing alkynyloxy group and an alkynyloxy group having 2 to 10 carbon atoms, such as an ethynyloxy group, a 2-propynyloxy group, and a 1,1-dimethyl-2-propynyloxy group.

Examples of the cycloalkoxy group include a fluorine-containing cycloalkoxy group and a cycloalkoxy group having 3 to 10 carbon atoms, such as a cyclopentyloxy group and a cyclohexyloxy group.

Examples of the cycloalkenyloxy group include a fluorine-containing cycloalkenyloxy group and a cycloalkenyloxy group having 3 to 10 carbon atoms, such as a cyclopentenyloxy group and a cyclohexenyloxy group.

Examples of the aryloxy group include a fluorine-containing aryloxy group and an aryloxy group having 6 to 10 carbon atoms, such as a phenyloxy group, a tolyloxy group, and a xylyloxy group.

$R^3$ to $R^{16}$ in the above Formulas (2) to (4) and (6) to (8) are each preferably a fluorine atom or an alkoxy group having a fluorine atom, because a degree of ionic dissociation is improved due to strong electron-withdrawing property thereof, and the ionic conductivity in the nonaqueous electrolyte solution is increased. Furthermore, $R^3$ to $R^{16}$ in the above Formulas (2) to (4) and (6) to (8) are each more preferably a fluorine atom, because mobility is improved due to a smaller anion size, so that the ionic conductivity in the nonaqueous electrolyte solution becomes very high. Accordingly, it is considered that the greater the number of P-F bonds in the above Formulas (2) to (9), the more improved the low-temperature performance.

The above $R^3$ to $R^{16}$ are each preferably an organic group selected from the group consisting of an alkenyloxy group and an alkynyloxy group. $R^3$ to $R^{16}$ are each not preferably a hydrocarbon group without an oxygen atom interposed, which is different from the alkenyloxy group and the alkynyloxy group, because the electron-withdrawing property is small, the degree of ionic dissociation decreases, and the ionic conductivity in the nonaqueous electrolyte solution decreases. $R^3$ to $R^{16}$ are each preferably a group having an unsaturated bond, such as the above alkenyloxy group and alkynyloxy group, because the compound actively decomposes on the positive electrode and the negative electrode to form a coating with more excellent durability. As the number of carbon atoms is large, the anion size becomes large, and the ionic conductivity in the nonaqueous electrolyte solution tends to decrease, and thus the number of carbon atoms in $R^3$ to $R^{16}$ is preferably 6 or less. The number of carbon atoms is preferably 6 or less because the ionic conductivity tends to be relatively higher, and in particular, a group selected from the group consisting of a 1-propenyloxy group, a 2-propenyloxy group, a 3-butenyloxy group, a 2-propynyloxy group, and a 1,1-dimethyl-2-propynyloxy group is preferable because the anion size is small.

In the above Formula (4), (5), (8), and (9), examples of the alkyl group represented by $X^{11}$ to $C^{15}$ include a fluorine-containing alkyl group and an alkyl group having 1 to 10 carbon atoms, such as a methyl group, an ethyl group, a propyl

group, an isopropyl group, a butyl group, a sec-butyl group, a tert-butyl group, a pentyl group, a trifluoromethyl group, a 2,2-difluoroethyl group, 2,2,2-trifluoroethyl group, a 2,2,3,3-tetrafluoropropyl group, and a 1,1,1,3,3,3-hexafluoroisopropyl group.

Examples of the alkenyl group include a fluorine-containing alkenyl group and an alkenyl group having 2 to 10 carbon atoms, such as a vinyl group, a 1-propenyl group, a 2-propenyl group, an isopropenyl group, a 2-butenyl group, a 3-butenyl group, and a 1,3-butadienyl group.

Examples of the alkynyl group include a fluorine-containing alkynyl group and an alkynyl group having 2 to 10 carbon atoms, such as an ethynyl group, a 2-propynyl group, and a 1,1-dimethyl-2-propynyl group.

Examples of the cycloalkyl group include a fluorine-containing cycloalkyl group and a cycloalkyl group having 3 to 10 carbon atoms, such as a cyclopentyl group and a cyclohexyl group.

Examples of the cycloalkenyl group include a fluorine-containing cycloalkenyl group and a cycloalkenyl group having 3 to 10 carbon atoms, such as a cyclopentenyl group and a cyclohexenyl group.

Examples of the aryl group include a fluorine-containing aryl group and an aryl group having 6 to 10 carbon atoms, such as a phenyl group, a tolyl group, and a xylyl group.

Examples of the alkoxy group include a fluorine-containing alkoxy group and an alkoxy group having 1 to 10 carbon atoms, such as a methoxy group, an ethoxy group, a propoxy group, an isopropoxy group, a butoxy group, a sec-butoxy group, a tert-butoxy group, a pentyloxy group, a trifluoromethoxy group, a 2,2-difluoroethoxy group, a 2,2,2-trifluoroethoxy group, a 2,2,3,3-tetrafluoropropoxy group, and a 1,1,1,3,3,3-hexafluoroisopropoxy group.

Examples of the alkenyloxy group include a fluorine-containing alkenyloxy group and an alkenyloxy group having 2 to 10 carbon atoms, such as a vinyloxy group, a 1-propenyloxy group, a 2-propenyloxy group, an isopropenyloxy group, a 2-butenyloxy group, a 3-butenyloxy group, and a 1,3-butadienyloxy group.

Examples of the alkynyloxy group include a fluorine-containing alkynyloxy group and an alkynyloxy group having 2 to 10 carbon atoms, such as an ethynyloxy group, a 2-propynyloxy group, and a 1,1-dimethyl-2-propynyloxy group.

Examples of the cycloalkoxy group include a fluorine-containing cycloalkoxy group and a cycloalkoxy group having 3 to 10 carbon atoms, such as a cyclopentyloxy group and a cyclohexyloxy group.

Examples of the cycloalkenyloxy group include a fluorine-containing cycloalkenyloxy group and a cycloalkenyloxy group having 3 to 10 carbon atoms, such as a cyclopentenyloxy group and a cyclohexenyloxy group.

Examples of the aryloxy group include a fluorine-containing aryloxy group and an aryloxy group having 6 to 10 carbon atoms, such as a phenyloxy group, a tolyloxy group, and a xylyloxy group.

It is more preferable that $X^{11}$ to $X^{15}$ in Formulas (4), (5), (8), and (9) are each a fluorine atom, because the degree of ionic dissociation is improved due to strong electron-withdrawing property thereof and the mobility is improved due to a smaller anion size, so that the ionic conductivity in the nonaqueous electrolyte solution becomes very high.

The above $X^{11}$ to $X^{15}$ are each preferably an organic group selected from the group consisting of an alkoxy group, an alkenyloxy group, and an alkynyloxy group. It is not preferable that $X^{11}$ to $X^{15}$ are each a hydrocarbon group without an oxygen atom interposed, which is different from the alkoxy group, the alkenyloxy group, and the alkynyloxy group, because the electron-withdrawing property is small, the degree of ionic dissociation decreases, and the ionic conductivity in the nonaqueous electrolyte solution decreases. As the number of carbon atoms is large, the anion size becomes large and the ionic conductivity in the nonaqueous electrolyte solution tends to decrease, and thus the number of carbon atoms in $X^{11}$ to $X^{15}$ is preferably 6 or less. The number of carbon atoms is preferably 6 or less because the ionic conductivity tends to be higher, and in particular, a group selected from the group consisting of a methoxy group, an ethoxy group, a propoxy group, a 1-propenyloxy group, a 2-propenyloxy group, a 3-butenyloxy group, a 2-propynyloxy group, and a 1,1-dimethyl-2-propynyloxy group is preferable because the anion size is small.

A compound having a structure in which $R^3$ and $R^4$ in the above Formula (2), $R^{11}$ to $R^{13}$ in Formula (6), $R^{14}$ and $R^{15}$ in Formula (7), and $R^{16}$ and $X^{14}$ in Formula (8) are all hydrocarbon groups with an oxygen atom interposed (alkoxy groups, alkenyloxy groups, alkynyloxy groups, cycloalkoxy groups, cycloalkenyloxy groups, aryloxy groups), that is, a compound containing no P-F bond and S-F bond, has extremely low solubility in a nonaqueous electrolyte solution (for example, less than 0.001% by mass), and thus it is difficult to achieve the object of the present disclosure by adding this compound to the nonaqueous electrolyte solution.

More specifically, examples of an anion of phosphate represented by the above Formula (2) include, for example, the following compound No. 14. However, the phosphate used in the present disclosure is not limited in any way by the following examples.

COMPOUND No. 14

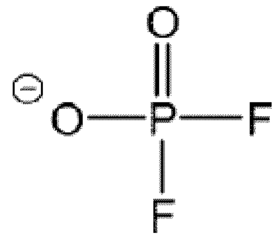

More specifically, examples of an anion of an imide salt represented by the above Formulas (3) to (9) include, for example, the following compounds Nos. 15 to 50. However, the imide salt used in the present disclosure is not limited in any way by the following examples.

COMPOUND No. 15

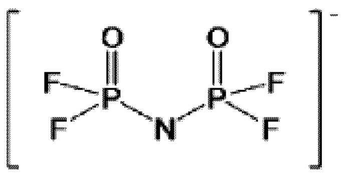

COMPOUND No. 16

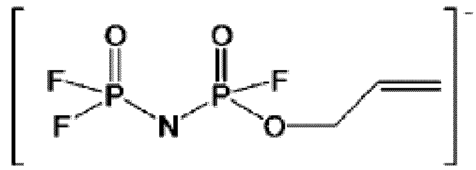

COMPOUND No. 17

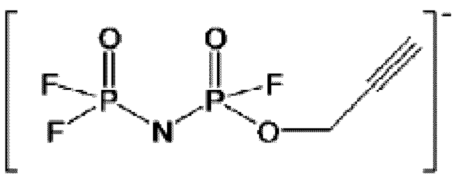

COMPOUND No. 18

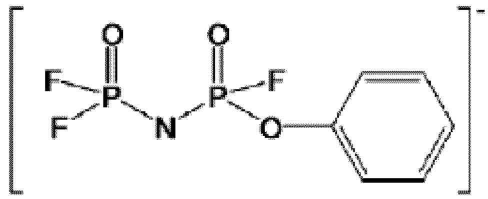

COMPOUND No. 19

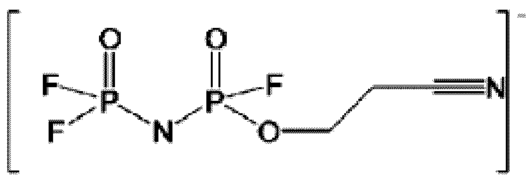

COMPOUND No. 20

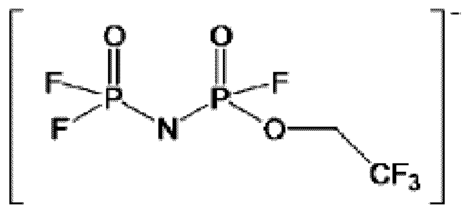

COMPOUND No. 21

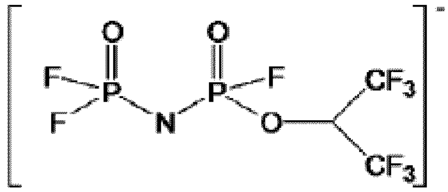

COMPOUND No. 22

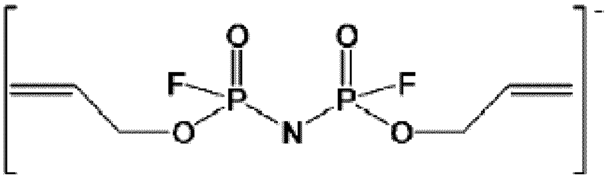

COMPOUND No. 23

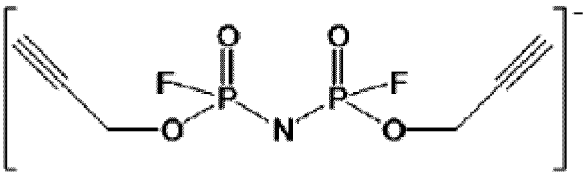

COMPOUND No. 24

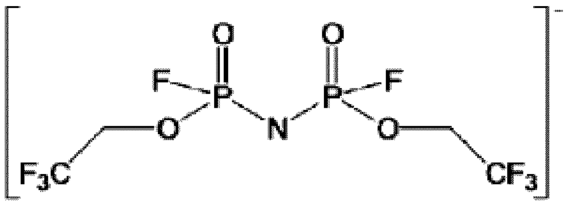

COMPOUND No. 25

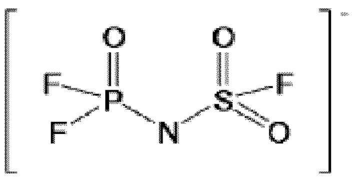

COMPOUND No. 26

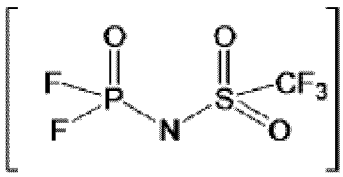

COMPOUND No. 27

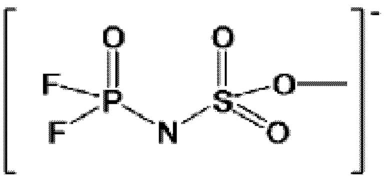

COMPOUND No. 28

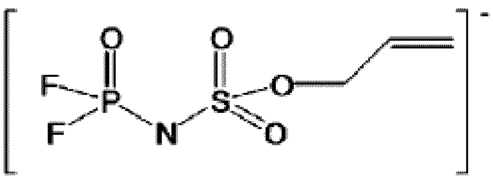

COMPOUND No. 29

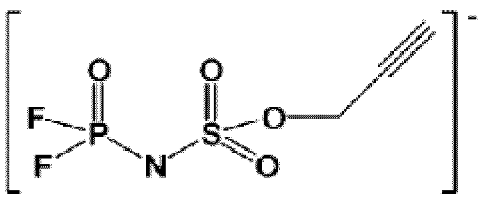

COMPOUND No. 30

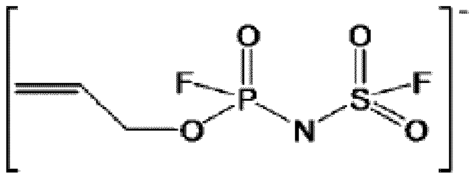

COMPOUND No. 31

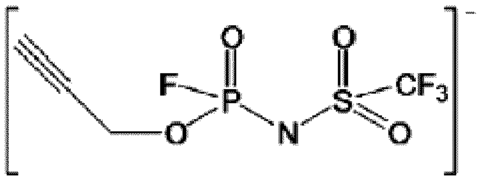

COMPOUND No. 32

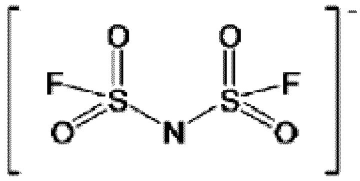

COMPOUND No. 33

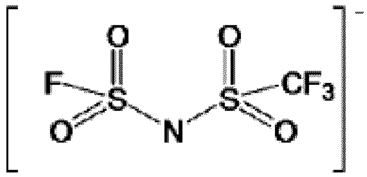

COMPOUND No. 34

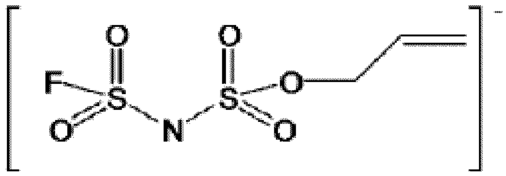

COMPOUND No. 35

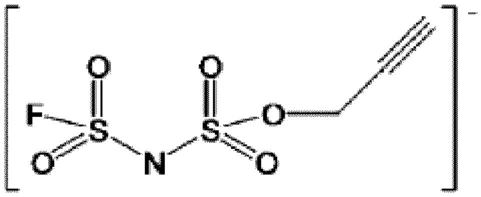

COMPOUND No. 36

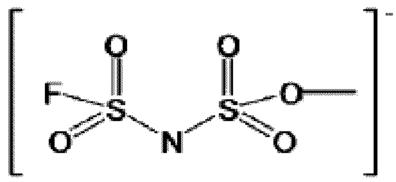

COMPOUND No. 37

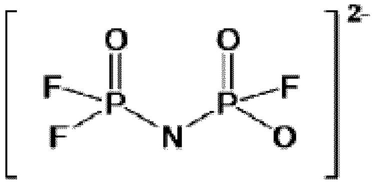

COMPOUND No. 38

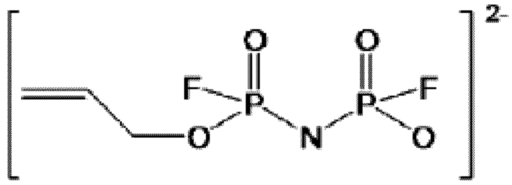

COMPOUND No. 39

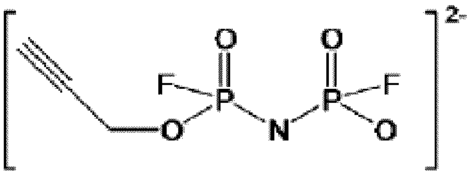

COMPOUND No. 40

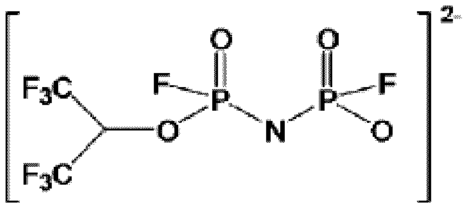

COMPOUND No. 41

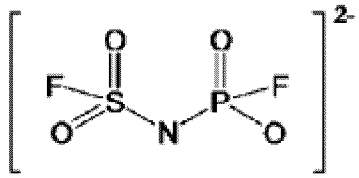

COMPOUND No. 42

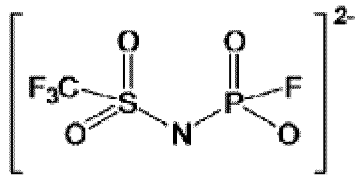

COMPOUND No. 43

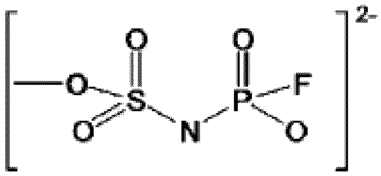

COMPOUND No. 44

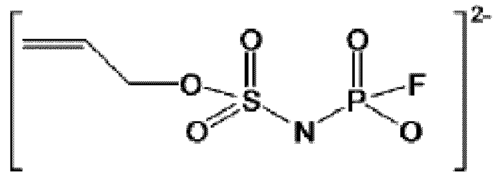

COMPOUND No. 45

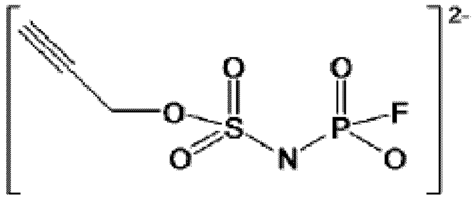

COMPOUND No. 46

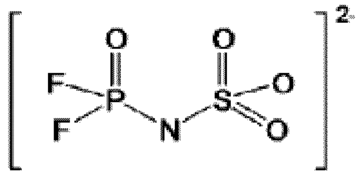

COMPOUND No. 47

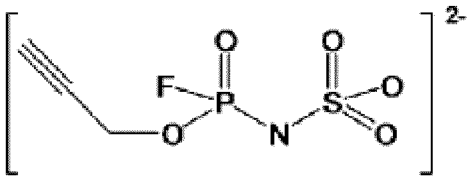

COMPOUND No. 48

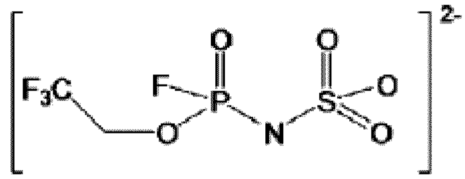

COMPOUND No. 49

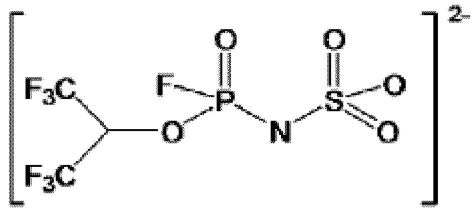

COMPOUND No. 50

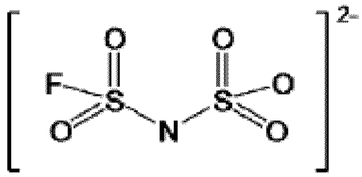

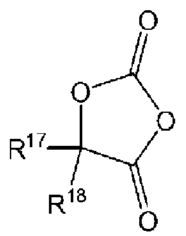

(10)

In Formula (10), $R^{17}$ to $R^{18}$ each independently represent a hydrogen atom, a fluorine atom, or an organic group selected from a linear or branched alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, a linear or branched alkoxy group having 1 to 10 carbon atoms, an alkenyloxy group having 2 to 10 carbon atoms, an alkynyloxy group having 2 to 10 carbon atoms, a cycloalkoxy

group having 3 to 10 carbon atoms, a cycloalkenyloxy group having 3 to 10 carbon atoms, and an aryloxy group having 6 to 10 carbon atoms, and the organic group may contain a fluorine atom, an oxygen atom, or an unsaturated bond.

In the above Formula (10), examples of the alkyl group represented by $R^{17}$ to $R^{18}$ include a fluorine-containing alkyl group and an alkyl group having 1 to 10 carbon atoms, such as a methyl group, an ethyl group, a propyl group, an isopropyl group, a butyl group, a sec-butyl group, a tert-butyl group, a pentyl group, a trifluoromethyl group, a 2,2-difluoroethyl group, 2,2,2-trifluoroethyl group, a 2,2,3,3-tetrafluoropropyl group, and a 1,1,1,3,3,3-hexafluoroisopropyl group.

Examples of the alkenyl group include a fluorine-containing alkenyl group and an alkenyl group having 2 to 10 carbon atoms, such as a vinyl group, a 1-propenyl group, a 2-propenyl group, an isopropenyl group, a 2-butenyl group, a 3-butenyl group, and a 1,3-butadienyl group.

Examples of the alkynyl group include a fluorine-containing alkynyl group and an alkynyl group having 2 to 10 carbon atoms, such as an ethynyl group, a 2-propynyl group, and a 1,1-dimethyl-2-propynyl group.

Examples of the cycloalkyl group include a fluorine-containing cycloalkyl group and a cycloalkyl group having 3 to 10 carbon atoms, such as a cyclopentyl group and a cyclohexyl group.

Examples of the cycloalkenyl group include a fluorine-containing cycloalkenyl group and a cycloalkenyl group having 3 to 10 carbon atoms, such as a cyclopentenyl group and a cyclohexenyl group.

Examples of the aryl group include a fluorine-containing aryl group and an aryl group having 6 to 10 carbon atoms, such as a phenyl group, a tolyl group, and a xylyl group.

Examples of the alkoxy group include a fluorine-containing alkoxy group and an alkoxy group having 1 to 10 carbon atoms, such as a methoxy group, an ethoxy group, a propoxy group, an isopropoxy group, a butoxy group, a sec-butoxy group, a tert-butoxy group, a pentyloxy group, a trifluoromethoxy group, a 2,2-difluoroethoxy group, a 2,2,2-trifluoroethoxy group, a 2,2,3,3-tetrafluoropropoxy group, and a 1,1,1,3,3,3-hexafluoroisopropoxy group.

Examples of the alkenyloxy group include a fluorine-containing alkenyloxy group and an alkenyloxy group having 2 to 10 carbon atoms, such as a vinyloxy group, a 1-propenyloxy group, a 2-propenyloxy group, an isopropenyloxy group, a 2-butenyloxy group, a 3-butenyloxy group, and a 1,3-butadienyloxy group.

Examples of the alkynyloxy group include a fluorine-containing alkynyloxy group and an alkynyloxy having 2 to 10 carbon atoms, such as an ethynyloxy group, a 2-propynyloxy group, and a 1,1-dimethyl-2-propynyloxy group.

Examples of the cycloalkoxy group include a fluorine-containing cycloalkoxy group and a cycloalkoxy group having 3 to 10 carbon atoms, such as a cyclopentyloxy group and a cyclohexyloxy group.

Examples of the cycloalkenyloxy group include a fluorine-containing cycloalkenyloxy group and a cycloalkenyloxy group having 3 to 10 carbon atoms, such as a cyclopentenyloxy group and a cyclohexenyloxy group.

Examples of the aryloxy group include a fluorine-containing aryloxy group and an aryloxy group having 6 to 10 carbon atoms, such as a phenyloxy group, a tolyloxy group, and a xylyloxy group.

More specifically, examples of the compound of the above Formula (10) include a compound in which $R^{17}$ and $R^{18}$ in the above Formula (10) are both hydrogen atoms, and an analog thereof (for example, a compound in which $R^{17}$ = a fluorine atom and $R^{18}$ = a hydrogen atom, a compound in which $R^{17}$ and $R^{18}$ = fluorine atoms, a compound in which $R^{17}$ = a methyl group and $R^{18}$ = a hydrogen atom, a compound in which $R^{17}$ = a methyl group and $R^{18}$ = a fluorine atom, a compound in which $R^{17}$ = a trifluoromethyl group and $R^{18}$ = a hydrogen atom, a compound in which $R^{17}$ = a trifluoromethyl group and $R^{18}$ = a fluorine atom, a compound in which $R^{17}$ = an ethyl group and $R^{18}$ = a hydrogen atom, a compound in which $R^{17}$ and $R^{18}$ = methyl groups, a compound in which $R^{17}$ = an ethyl group and $R^{18}$ = a fluorine atom, a compound in which $R^{17}$ = a 2,2,2-trifluoroethyl group and $R^{18}$ = a hydrogen atom, a compound in which $R^{17}$ = a 2,2,2-trifluoroethyl group and $R^{18}$ = a fluorine atom, a compound in which $R^{17}$ = a trifluoromethyl group and $R^{18}$ = a methyl group, a compound in which $R^{17}$ and $R^{18}$ = trifluoromethyl groups and $R^{18}$ = a fluorine atom, a compound in which $R^{17}$ = a n-propyl group and $R^{18}$ = a hydrogen atom, a compound in which $R^{17}$ = an ethyl group and $R^{18}$ = a methyl group, a compound in which $R^{17}$ = a vinyl group and $R^{18}$ = a hydrogen atom, and a compound in which $R^{17}$ = an ethynyl group and $R^{18}$ = a hydrogen atom).

Among these, a compound in which $R^{17}$ and $R^{18}$ = hydrogen atoms, or the compound in which $R^{17}$ = a methyl group and $R^{18}$ = a hydrogen atom is preferable, and the compound in which $R^{17}$ and $R^{18}$ = hydrogen atoms is particularly preferable.

The compounds of the above Formulas (1) to (10) can be produced by various methods.

A total content of the at least one selected from the group consisting of the compounds of (1) to (10) above is preferably 0.001 to 10% by mass with respect to a total amount of the nonaqueous electrolyte solution. A suitable lower limit is 0.001% by mass or more, more preferably 0.01% by mass or more, and further preferably 0.1% by mass or more, and a suitable upper limit is 10.0% by mass or less, more preferably 5.0% by mass or less, and further preferably 2.0% by mass or less.

By setting the total content to 0.001% by mass or more, the effect of improving the low-temperature rate performance and the cycle characteristic under severe conditions of the nonaqueous electrolyte solution battery can be sufficiently obtained. On the other hand, by setting the total content to 10.0% by mass or less, it is possible to prevent addition of an excessive amount of a compound that does not contribute to improving the low-temperature rate

performance and the cycle characteristic under severe conditions, and it is also effective in preventing a decrease in the ionic conductivity due to an increase in viscosity of the electrolyte solution and a deterioration of battery performance due to an increase in resistance.

One kind or a plurality of kinds of the compounds of (1) to (10) above may be added.

[(II) Solute]

The nonaqueous electrolyte solution in the lithium ion secondary battery according to the present disclosure preferably contains a solute (hereinafter, also referred to as (II) or solute (II)).

The solute is not limited, but is preferably an ionic salt, and more preferably an ionic salt containing fluorine.

The solute is preferably, for example, an ionic salt containing a pair of a lithium ion and at least one anion selected from the group consisting of a hexafluorophosphate anion, a tetrafluoroborate anion, a perchlorate anion, a hexafluoroarsenate anion, a hexafluoroantimonate anion, a trifluoromethanesulfonate anion, a bis(trifluoromethanesulfonyl)imide anion, a bis(pentafluoroethanesulfonyl)imide anion, a (trifluoromethanesulfonyl)(pentafluoroethanesulfonyl)imide anion, a bis(fluorosulfonyl)imide anion, a (trifluoromethanesulfonyl)(fluorosulfonyl)imide anion, a (pentafluoroethanesulfonyl)(fluorosulfonyl)imide anion, and a tris(trifluoromethanesulfonyl)methide anion.

The solute is preferably at least one selected from the group consisting of $LiPF_6$, $LiBF_4$, $LiSbF_6$, $LiAsF_6$, $LiClO_4$, $LiCF_3SO_3$, $LiC_4F_9SO_3$, $LiN(SO_2F)_2$, $LiAlO_2$, $LiAlCl_4$, LiCl, and LiI.

One type of these solutes may be used alone, or two or more types thereof may be mixed and used in any combination and any ratio according to an application.

Among the above solutes, in view of energy density, an output characteristic, life, and the like of a nonaqueous electrolyte solution battery, the cation is preferably lithium, and the anion is preferably at least one selected from the group consisting of a hexafluorophosphate anion, a tetrafluoroborate anion, a bis(trifluoromethanesulfonyl)imide anion, and a bis(fluorosulfonyl)imide anion.

A total amount of the solute (hereinafter, also described as a "solute concentration") in the nonaqueous electrolyte solution according to the present disclosure is not limited, but a lower limit thereof is preferably 0.5 mol/L or more, more preferably 0.7 mol/L or more, and further preferably 0.9 mol/L or more. Further, an upper limit of the solute concentration is preferably 5.0 mol/L or less, more preferably 4.0 mol/L or less, and further preferably 2.0 mol/L or less. Setting the solute concentration to 0.5 mol/L or more allows for reducing decrease in the cycle characteristic and the output characteristic of the nonaqueous electrolyte solution battery due to decrease in ionic conductivity, and setting the solute concentration to 5.0 mol/L or less allows for reducing decrease in ionic conductivity, and decrease in the cycle characteristic and the output characteristic of the nonaqueous electrolyte solution battery due to an increase in the viscosity of the nonaqueous electrolyte solution.

[(III) Nonaqueous Organic Solvent]

The nonaqueous electrolyte solution in the lithium ion secondary battery according to the present disclosure preferably contains a nonaqueous organic solvent (hereinafter, also referred to as (III) or nonaqueous organic solvent (III)).

A type of the nonaqueous organic solvent that can be used in the nonaqueous electrolyte solution in the lithium ion secondary battery according to the present disclosure is not limited, and any nonaqueous organic solvent can be used.

The nonaqueous organic solvent is preferably at least one selected from the group consisting of a cyclic ester, a chain ester, a cyclic ether, a chain ether, a sulfone compound, a sulfoxide compound, and an ionic liquid.

Specifically, the nonaqueous organic solvent is preferably at least one selected from the group consisting of ethyl methyl carbonate (hereinafter, also described as "EMC"), dimethyl carbonate (hereinafter, also described as "DMC"), diethyl carbonate (hereinafter, also described as "DEC"), methyl propyl carbonate, ethyl propyl carbonate, methyl butyl carbonate, methyl 2,2,2-trifluoroethyl carbonate, ethyl 2,2,2-trifluoroethyl carbonate, propyl 2,2,2-trifluoroethyl carbonate, bis(2,2,2-trifluoroethyl) carbonate, 1,1,1,3,3,3-hexafluoro-1-propylmethyl carbonate, 1,1,1,3,3,3-hexafluoro-1-propylethyl carbonate, 1,1,1,3,3,3-hexafluoro-1-propylpropyl carbonate, bis(1,1,1,3,3,3-hexafluoro-1-propyl) carbonate, ethylene carbonate (hereinafter, also described as "EC"), propylene carbonate (hereinafter, also described as "PC"), butylene carbonate, fluoroethylene carbonate (hereinafter, also described as "FEC"), difluoroethylene carbonate, methyl acetate, ethyl acetate, methyl propionate, ethyl propionate, methyl 2-fluoropropionate, ethyl 2-fluoropropionate, diethyl ether, dibutyl ether, diisopropyl ether, 1,2-dimethoxyethane, tetrahydrofuran, 2-methyltetrahydrofuran, furan, tetrahydropyran, 1,3-dioxane, 1,4-dioxane, N,N-dimethylformamide, acetonitrile, propionitrile, dimethylsulfoxide, sulfolane, $\gamma$-butyrolactone, and $\gamma$-valerolactone.

In the present disclosure, an ionic liquid having a salt structure may be used as the nonaqueous organic solvent.

The nonaqueous organic solvent is preferably at least one selected from the group consisting of a cyclic ester and a chain ester because the preferable solvent achieves excellent input and output characteristics at a low temperature.

The above nonaqueous organic solvent is preferably at least one selected from the group consisting of cyclic

carbonates and chain carbonates because the preferable solvent achieves an excellent cycle characteristic at a high temperature.

Preferably, the nonaqueous organic solvent contains a cyclic ester, and the cyclic ester is a cyclic carbonate.

Specific examples of the above cyclic carbonate include EC, PC, butylene carbonate, and FEC, and at least one selected from the group consisting of EC, PC, and FEC is preferable.

Preferably, the nonaqueous organic solvent contains a chain ester, and the chain ester is chain carbonate.

Specific examples of the above chain carbonate include EMC, DMC, DEC, methyl propyl carbonate, ethyl propyl carbonate, methyl 2,2,2-trifluoroethyl carbonate, ethyl 2,2,2-trifluoroethyl carbonate, 1,1,1,3,3,3-hexafluoro-1-propylmethyl carbonate, and 1,1,1,3,3,3-hexafluoro-1-propylethyl carbonate, and at least one selected from the group consisting of EMC, DMC, DEC, and methyl propyl carbonate is preferable.

Specific examples of the above ester include methyl acetate, ethyl acetate, methyl propionate, ethyl propionate, methyl 2-fluoropropionate, and ethyl 2-fluoropropionate.

[(IV) Another Additive]

An additive component to be commonly used in the nonaqueous electrolyte solution according to the present disclosure may be further added in any ratio as long as the gist of the present disclosure is not impaired.

Another additive preferably contains at least one selected from the group consisting of a cyclic carbonate compound, a Si-containing compound, and a sulfate ester compound.

Examples of the cyclic carbonate compound include vinylene carbonate, vinyl ethylene carbonate, divinyl ethylene carbonate, fluoroethylene carbonate, and difluoroethylene carbonate. These may be used alone or in combination.

Examples of the Si-containing compound include hexamethyldisiloxane, 1,3-divinyltetramethyldisiloxane, (bishexafluoroisopropoxy)(dimethyl)(divinyl)disiloxane, tetramethylsilane, trimethylvinylsilane, tetravinylsilane, and vinyldimethylfluorosilane. These may be used alone or in combination.

Examples of the sulfate ester compound include 1,3,2-dioxothiolane-2,2-dioxide, 1,3-propane sultone, 1-propene-1,3-sultone, 1,3-butane sultone, and 1,4-butane sultone. These may be used alone or in combination.

Among the above, from the viewpoint of improving the cycle characteristic under severe conditions and preventing deterioration of the rate performance at a low temperature (0°C), at least one selected from the group consisting of vinylene carbonate, fluoroethylene carbonate, tetravinylsilane, 1,3,2-dioxothiolane-2,2-dioxide, and 1,3-propane sultone is preferable, at least one selected from the group consisting of vinylene carbonate, fluoroethylene carbonate, and 1,3,2-dioxothiolane-2,2-dioxide is more preferable, and at least one selected from the group consisting of vinylene carbonate and 1,3,2-dioxothiolane-2,2-dioxide is further preferable.

Another additive may include at least one selected from the group consisting of a bis(oxalato)borate, a tris(oxalato)phosphate, and a tris(oxalato)silicate.

Specific examples include lithium bis(oxalato)borate (LiBOB).

A content of the above additive in the nonaqueous electrolyte solution is preferably 0.01% by mass or more and 5.0% by mass or less with respect to the total amount of the nonaqueous electrolyte solution.

When a content of the ionic salt exemplified as the solute is less than 0.5 mol/L, which is the lower limit of the suitable concentration of the solute, in the nonaqueous electrolyte solution, the ionic salt can exert an effect of coating a negative electrode and a protective effect of a positive electrode as "another additive". In this case, the content in the nonaqueous electrolyte solution is preferably 0.01% to 5.0% by mass.

Examples of the ionic salt in this case include lithium hexafluorophosphate, lithium tetrafluoroborate, lithium trifluoromethanesulfonate, lithium bis(trifluoromethanesulfonyl)imide, lithium bis(fluorosulfonyl)imide, and lithium (trifluoromethanesulfonyl)(fluorosulfonyl)imide.

An alkali metal salt other than the above solutes may be used as an additive.

Specific examples include carboxylates such as lithium acrylate and lithium methacrylate, and sulfate ester salts such as lithium methyl sulfate and lithium ethyl sulfate.

In addition, the nonaqueous electrolyte solution according to the present disclosure may also contain a polymer, and as in the case of being used in a nonaqueous electrolyte solution battery referred to as a polymer battery, the nonaqueous electrolyte solution can be quasi-solidified with a gelling agent or a cross-linked polymer. The polymer solid electrolyte includes one containing the nonaqueous organic solvent as a plasticizer.

The above polymer is not limited as long as the polymer is an aprotic polymer capable of dissolving the compounds of the above Formulas (1) to (10), the above solute, and the above another additive. Examples of the above polymer include polymers having polyethylene oxide as a main chain or a side chain, homopolymers or copolymers of polyvinylidene fluoride, methacrylic acid ester polymers, and polyacrylonitrile. When a plasticizer is added to these polymers, an aprotic nonaqueous organic solvent is preferable among the above nonaqueous organic solvents.

[Lithium Ion Secondary Battery]

In the lithium ion secondary battery according to the present disclosure, the surface roughness (Ra) of the surface of the positive electrode active material layer containing the positive electrode active material is less than $1.0 \times 10^4$ Å.

In the lithium ion secondary battery according to the present disclosure, the surface roughness (Ra) of the surface of the positive electrode active material layer is less than $1.0 \times 10^4$ Å. By setting Ra less than $1.0 \times 10^4$ Å, the cycle characteristic is excellent even in a high-temperature environment.

The above Ra is less than $1.0 \times 10^4$ Å, preferably $6.5 \times 10^3$ Å or less, and more preferably $4.5 \times 10^3$ Å or less. A lower limit is not particularly limited, but may be, for example, $0.8 \times 10^3$ Å or more.

The surface roughness of the surface of the positive electrode active material layer can be measured according to the procedure described in JIS B 0633, and in the present specification, a stylus profilometer (Dektak 8 manufactured by Veeco Instruments Inc.) is used as a measuring instrument.

The positive electrode active material preferably uses a material in which lithium ions can be reversibly intercalated and deintercalated.

For example, lithium-containing transition metal composite oxides such as $LiCoO_2$, $LiNiO_2$, $LiMnO_2$, and $LiMn_2O_4$, these lithium-containing transition metal composite oxides including a mixture of a plurality of transition metals such as Co, Mn, and Ni, these lithium-containing transition metal composite oxides in which a part of the transition metals is substituted with a metal other than the transition metals, phosphate compounds of transition metals such as $LiFePO_4$, $LiCoPO_4$, and $LiMnPO_4$ referred to as olivine, oxides such as $TiO_2$, $V_2O_5$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like can be used as a positive electrode active material.

Specific examples include $Li[Ni_{1/3}Mn_{1/3}Co_{1/3}]O_2$, $Li[Ni_{0.45}Mn_{0.35}Co_{0.2}]O_2$, $Li[Ni_{0.5}Mn_{0.3}Co_{0.2}]O_2$, $Li[Ni_{0.6}Mn_{0.2}Co_{0.2}]O_2$, $Li[Ni_{0.8}Mn_{0.1}Co_{0.1}]O_2$, $Li[Ni_{0.49}Mn_{0.3}Co_{0.2}Zr_{0.01}]O_2$, $Li[Ni_{0.49}Mn_{0.3}Co_{0.2}Mg_{0.01}]O_2$, $LiNi_{0.8}Co_{0.2}O_2$, $LiNi_{0.85}Co_{0.10}Al_{0.05}O_2$, $LiNi_{0.87}Co_{0.10}Al_{0.03}O_2$, $LiNi_{0.90}Co_{0.07}Al_{0.03}O_2$, $LiNi_{0.6}Co_{0.3}Al_{0.1}O_2$, and $LiMn_{1.5}Ni_{0.5}O_4$.

Among the above, the positive electrode active material is preferably a lithium-containing transition metal composite oxide. The lithium-containing transition metal composite oxide preferably contains at least one of nickel, cobalt, and manganese.

The above positive electrode active material can be classified into a single crystal (monolithic) material and a polycrystalline (non-monolithic) material. In the lithium ion secondary battery according to the present disclosure, a monolithic material is preferably used as the positive electrode active material.

A monolithic positive electrode active material may be prepared or may be a commercially available product. When preparing the monolithic positive electrode active material, the monolithic positive electrode active material can be achieved, for example, by using a larger excess of lithium under a high sintering temperature for a longer sintering time.

The positive electrode active material is preferably mainly composed of primary particles. Specifically, when the surface of the positive electrode active material layer is observed with an electron microscope at 5,000× magnification, the primary particles of the positive electrode active material preferably constitute 70% or more of the number of particles in a field of view of 17,000 nm × 23,000 nm. By setting the above ratio to 70% or more, it becomes easier to make the surface roughness of the surface of the positive electrode within a predetermined range. The above ratio is preferably 70% or more, more preferably 80% or more, and further preferably 100%, that is, the entire of the positive electrode active material is composed of primary particles.

A particle size of the primary particles is preferably in a particle size range of 1 to 12 μm.

In another preferable embodiment, regarding the particle size of the primary particles, a primary particle having a particle size range of 7 to 12 μm and a primary particle having a particle size range of 1 μm or more and less than 7 μm are included from a viewpoint of close packing of the particles.

The particle size of the primary particles can be determined, for example, by observing the surface of the positive electrode with the electron microscope at 5,000 × magnification. Specifically, 30 particles are selected from a field of view of an electron microscope photograph, a particle shape is approximated to a circle, a major axis diameter thereof is measured visually, and an average value thereof (hereinafter, may be simply described as "particle size of the primary particles" or the like) is calculated.

The positive electrode active material layer contains the above positive electrode active material.

The positive electrode active material layer preferably further contains a conductive aid and a binder (binding agent).

Examples of the binding agent include polytetrafluoroethylene, polyvinylidene fluoride, and styrene-butadiene rubber (SBR) resin.

The conductive aid can use, for example, carbon black such as acetylene black or ketjen black, vapor-grown carbon nanofiber, carbon fiber, or graphite (granular graphite or flake graphite), and preferably uses acetylene black or ketjen black, which has low crystallinity.

One type of these binding agents and conductive aids may be used alone, or two or more types thereof may be

used in combination.

A content of the positive electrode active material in the positive electrode active material layer is preferably 84% by mass or more, and more preferably 90% by mass or more. An upper limit of the content is preferably 98% by mass or less, and more preferably 96% by mass or less.

When the positive electrode active material layer contains a conductive aid, a content of the conductive aid in the positive electrode active material layer is preferably 1% by mass or more, and more preferably 3% by mass or more. An upper limit of the content is preferably 8% by mass or less, and more preferably 5% by mass or less.

When the positive electrode active material layer contains a binder, a content of the binder in the positive electrode active material layer is preferably 1% by mass or more, and more preferably 3% by mass or more. An upper limit of the content is preferably 8% by mass or less, and more preferably 5% by mass or less.

By setting the content of each of the components in the positive electrode active material layer within the above range, it is possible to easily set the surface roughness of the surface of the positive electrode within a desired range, which is preferable.

A method for forming the positive electrode active material layer is not particularly limited, but may include, for example, applying a composition for forming a positive electrode active material layer containing a positive electrode active material, a conductive aid, a binding agent, and a solvent to a surface of a positive electrode current collector, and drying the obtained product to form the positive electrode active material layer.

Examples of the solvent that may be included in the composition for forming a positive electrode active material layer include water and an organic solvent such as N-methylpyrrolidone, toluene, and alcohol.

A content of the solvent is not particularly limited, but is preferably mixed such that a solid content concentration is 40 to 70% by mass from a viewpoint of coatability of the composition for forming a positive electrode active material layer.

In the present disclosure, a solid content of the composition for forming a positive electrode active material layer refers to a component excluding the solvent contained in the composition for forming a positive electrode active material layer.

The composition for forming a positive electrode active material layer may be, for example, in a form of paste or slurry, as long as this composition can ensure the coatability.

[Positive Electrode]

The lithium ion secondary battery according to the present disclosure preferably contains a positive electrode having the above positive electrode active material layer. As described above, the positive electrode material (positive electrode active material) preferably uses the material in which the lithium ions can be reversibly intercalated and deintercalated. The positive electrode active material is as described above.

In the positive electrode, a positive electrode active material layer is formed on at least one surface of the positive electrode current collector.

The lithium ion secondary battery according to the present disclosure preferably contains a negative electrode. Furthermore, a separator, an exterior body, and the like are preferably included.

[Negative Electrode]

A negative electrode material (negative electrode active material) is not particularly limited, but preferably uses a material in which lithium ions can be reversibly intercalated and deintercalated.

For example, in the case of the lithium ion secondary battery in which cations are mainly lithium, the negative electrode active material constituting the negative electrode is capable of doping and dedoping lithium ions. Examples of the negative electrode active material include a material containing at least one selected from, for example, a carbon material in which a d value of a lattice plane (002 plane) in X-ray diffraction is 0.340 nm or less, a carbon material in which the d value of the lattice plane (002 plane) in X-ray diffraction exceeds 0.340 nm, oxides of one or more metal selected from Si, Sn, and Al, one or more metals selected from Si, Sn, and Al, alloys containing these metals, alloys of these metals and lithium, or alloys of the above alloys and lithium, and lithium titanium oxide. One of these negative electrode active materials can be used alone, or two or more thereof can be used in combination. Lithium metal, metal nitrides, tin compounds, conductive polymers, and the like may also be used.

In the negative electrode, for example, a negative electrode active material layer is formed on at least one surface of a negative electrode current collector. The negative electrode active material layer includes, for example, the negative electrode active material described above, a binding agent (binder), and, if necessary, a conductive aid. Examples of the binding agent include polytetrafluoroethylene, polyvinylidene fluoride, and styrene-butadiene rubber (SBR) resin. For example, a carbon material such as acetylene black, ketjen black, carbon fiber, or graphite (granular graphite or flake graphite) can be used as the conductive aid. One type of these binding agents and conductive aids may be used alone, or two or more types thereof may be used in combination.

[Current Collector]

Copper, aluminum, stainless steel, nickel, titanium, or alloys thereof can be used for the positive electrode current collector and the negative electrode current collector. An active material layer is formed on at least one surface of the current collector.

[Separator]

A nonwoven fabric, porous sheet, or a film made of polyolefin (for example, polypropylene or polyethylene), paper, and glass fiber is used as a separator for preventing contact between the positive electrode and the negative electrode. These are preferably microporous such that the electrolyte solution easily permeates and the ions easily pass through.

[Exterior Body]

For example, a coin-shaped, cylindrical, square-shaped metal can, or a laminated exterior body can be used as an exterior body. Examples of a metal can material include a nickel-plated steel plate, a stainless steel plate, a nickel-plated stainless steel plate, aluminum or alloys thereof, nickel, and titanium. For example, an aluminum laminated film, a SUS laminated film, a laminated film of silica-coated polypropylene or silica-coated polyethylene can be used as the laminated exterior body.

A configuration of the lithium ion secondary battery according to the present disclosure is not particularly limited, as long as the above specific positive electrode and specific nonaqueous electrolyte solution are included, but for example, can be a configuration in which an electrode element, including the positive electrode and the negative electrode arranged to face each other, and a nonaqueous electrolyte solution are both contained in the exterior body. A shape of the lithium ion secondary battery according to the present disclosure is not limited, but may have a coin shape, a cylindrical shape, a square shape, or an aluminum laminate sheet shape.

The lithium ion secondary battery according to the present disclosure can have a high charge potential by setting the surface roughness of the surface of the positive electrode less than $1.0 \times 10^4$ Å. The charge potential is preferably 4.4 V or more.

Examples

Hereinafter, although the present disclosure will be specifically explained with reference to Examples, the present disclosure is not limited to these Examples.

<Preparation of Electrolyte Solution for Lithium Ion Secondary Battery>

[Preparation of Electrolyte Solution 1A-1]

In the nonaqueous organic solvent (III) obtained by mixing ethylene carbonate (hereinafter, described as "EC") and ethyl methyl carbonate (hereinafter, described as "EMC") in a volume ratio of EC:EMC = 3:7, lithium hexafluorophosphate (hereinafter, described as "$LiPF_6$") was dissolved as (II) such that a concentration thereof in the electrolyte solution was 1 mol/L, to prepare an electrolyte solution 1A-1.

[Preparation of Electrolyte Solution 1A-2]

In the nonaqueous organic solvent (III) in which EC and EMC were mixed in the volume ratio of EC:EMC = 3:7, $LiPF_6$ was dissolved as (II) such that the concentration thereof in the electrolyte solution was 1 mol/L, lithium difluorophosphate (hereinafter, described as "$LiPO_2F_2$") was dissolved as (I) such that a concentration thereof in the electrolyte solution was 0.5% by mass, and vinylene carbonate (hereinafter, described as "VC") was dissolved as (IV) such that a concentration thereof in the electrolyte solution was 0.5% by mass, to prepare an electrolyte solution 1A-2.

[Preparation of Electrolyte Solution 1A-3 and Electrolyte Solution 1A-4]

An electrolyte solution 1A-3 and an electrolyte solution 1A-4 were prepared in the same manner as in the electrolyte solution 1A-2, except that the concentrations of (I) in the electrolyte solutions were 0.8% by mass and 1.0% by mass, respectively.

[Preparation of Electrolyte Solution 1A-5]

In the electrolyte solution 1A-2, lithium difluorobis(oxalato)phosphate (hereinafter, referred to as a "compound (1)-A") was further dissolved as (I) such that a concentration thereof in the electrolyte solution was 0.5% by mass, to prepare an electrolyte solution 1A-5.

[Preparation of Electrolyte Solution 1A-6]

In the electrolyte solution 1A-2, lithium bis(fluorosulfonyl)imide (LiFSI) was further dissolved as (I) such that a concentration thereof in the electrolyte solution was 1.0% by mass, to prepare an electrolyte solution 1A-6.

[Preparation of Electrolyte Solution 1A-7]

In the nonaqueous organic solvent (III) in which EC and EMC were mixed in the volume ratio of EC:EMC = 3:7, $LiPF_6$ was dissolved as (II) such that the concentration thereof in the electrolyte solution was 1 mol/L, the compound (1)-A was dissolved as (I) such that a concentration thereof in the electrolyte solution was 0.5% by mass, and a compound in which $R^9$ = F, $R^{10}$ = F, $X^{11}$ = F, and $M^3$ = Li in Formula (4) (hereinafter, referred to as a compound (4)-A) was dissolved as (I) such that a concentration thereof in the electrolyte solution was 1.0% by mass, to prepare an electrolyte solution 1A-7.

[Preparation of Electrolyte Solution 1A-8]

In the electrolyte solution 1A-7, 1,3,2-dioxathiolane-2,2-dioxide (hereinafter, also referred to as "DTD") was dissolved as (IV) such that a concentration thereof in the electrolyte solution was 0.5% by mass, to prepare an electrolyte solution 1A-8.

[Preparation of Electrolyte Solution 1A-9]

In the nonaqueous organic solvent (III) in which EC and EMC were mixed in the volume ratio of EC:EMC = 3:7, $LiPF_6$ was dissolved as (II) such that the concentration thereof in the electrolyte solution was 1 mol/L, the compound (4)-A was dissolved as (I) such that the concentration thereof in the electrolyte solution was 1.0% by mass, and lithium bis(oxalato)borate (LiBOB) was dissolved as (IV) such that a concentration thereof in the electrolyte solution was 0.5% by mass, to prepare an electrolyte solution 1A-9.

[Preparation of Electrolyte Solution 1A-10]

In the electrolyte solution 1A-9, VC was further dissolved as (IV) such that the concentration thereof in the electrolyte solution was 0.5% by mass, to prepare an electrolyte solution 1A-10.

[Preparation of Electrolyte Solution 1A-11]

In the nonaqueous organic solvent (III) in which EC and EMC were mixed in the volume ratio of EC:EMC = 3:7, $LiPF_6$ was dissolved as (II) such that the concentration thereof in the electrolyte solution was 1 mol/L, $LiPO_2F_2$ was dissolved as (I) such that the concentration thereof in the electrolyte solution was 0.5% by mass, the compound (1)-A was dissolved as (I) such that the concentration thereof in the electrolyte solution was 0.5% by mass, and tetravinylsilane (hereinafter, described as "TVSi") was dissolved as (IV) such that a concentration thereof in the electrolyte solution was 0.2% by mass, to prepare an electrolyte solution 1A-11.

[Preparation of Electrolyte Solution 1A-12]

In the nonaqueous organic solvent (III) in which EC and EMC were mixed in the volume ratio of EC:EMC = 3:7, $LiPF_6$ was dissolved as (II) such that the concentration thereof in the electrolyte solution was 1 mol/L, the compound (1)-A was dissolved as (I) such that the concentration thereof in the electrolyte solution was 0.5% by mass, and 1,3-propane sultone (hereinafter, described as "PRS") was dissolved as (IV) such that a concentration thereof in the electrolyte solution was 0.5% by mass, to prepare an electrolyte solution 1A-12.

Compositions of the electrolyte solutions 1A-1 to 1A-12 are shown in Table 1 below.

Table 1

<table>
<tr><th rowspan="2">Electrolyte solution No.</th><th colspan="2">(II)</th><th>(III)</th><th colspan="2">(I)</th><th colspan="2">(IV)</th></tr>
<tr><th>Type</th><th>mol/L</th><th>Type</th><th>Type</th><th>% by mass</th><th>Type</th><th>% by mass</th></tr>
<tr><td>1A-1</td><td rowspan="18">$LiPF_6$</td><td rowspan="18">1</td><td rowspan="18">EC/EMC 3/7</td><td>-</td><td>-</td><td>-</td><td>-</td></tr>
<tr><td>1A-2</td><td>$LiPO_2F_2$</td><td>0.5</td><td>VC</td><td>0.5</td></tr>
<tr><td>1A-3</td><td>$LiPO_2F_2$</td><td>0.8</td><td>VC</td><td>0.5</td></tr>
<tr><td>1A-4</td><td>$LiPO_2F_2$</td><td>1.0</td><td>VC</td><td>0.5</td></tr>
<tr><td rowspan="2">1A-5</td><td>$LiPO_2F_2$</td><td>0.5</td><td rowspan="2">VC</td><td rowspan="2">0.5</td></tr>
<tr><td>Compound (1)-A</td><td>0.5</td></tr>
<tr><td rowspan="2">1A-6</td><td>$LiPO_2F_2$</td><td>0.5</td><td rowspan="2">VC</td><td rowspan="2">0.5</td></tr>
<tr><td>LiFSI</td><td>1.0</td></tr>
<tr><td rowspan="2">1A-7</td><td>Compound (1)-A</td><td>0.5</td><td rowspan="2">-</td><td rowspan="2">-</td></tr>
<tr><td>Compound (4)-A</td><td>1.0</td></tr>
<tr><td rowspan="2">1A-8</td><td>Compound (1)-A</td><td>0.5</td><td rowspan="2">DTD</td><td rowspan="2">0.5</td></tr>
<tr><td>Compound (4)-A</td><td>1.0</td></tr>
<tr><td>1A-9</td><td>Compound (4)-A</td><td>1.0</td><td>LiBOB</td><td>0.5</td></tr>
<tr><td rowspan="2">1A-10</td><td rowspan="2">Compound (4)-A</td><td rowspan="2">1.0</td><td>VC</td><td>0.5</td></tr>
<tr><td>LiBOB</td><td>0.5</td></tr>
<tr><td rowspan="2">1A-11</td><td>$LiPO_2F_2$</td><td>0.5</td><td rowspan="2">TVSi</td><td rowspan="2">0.2</td></tr>
<tr><td>Compound (1)-A</td><td>0.5</td></tr>
<tr><td>1A-12</td><td>Compound (1)-A</td><td>0.5</td><td>PRS</td><td>0.5</td></tr>
</table>

[Production of Single Crystal NCM622 Positive Electrode]

In 92% by mass of single crystal $LiNi_{0.6}Co_{0.2}Mn_{0.2}O_2$ powder (product number: M1-S) manufactured by BTR New Energy Materials Inc. (hereinafter, simply described as "BTR"), 4% by mass of polyvinylidene fluoride (hereinafter, described as "PVDF") was mixed as a binder, 3% by mass of carbon black and 1% by mass of vapor-grown carbon nanofiber (VGCF (registered trademark)-H manufactured by Resonac Corporation) were mixed as a conductive aid, and N-methylpyrrolidone was further added to form a paste. The paste was applied to both sides of an aluminum foil, followed by drying to form a positive electrode active material layer, which was used as a test positive electrode body.

That is, a ratio of the primary particles in the positive electrode active material contained in the above test positive electrode body was 100%.

[Production of Polycrystalline NCM622 Positive Electrode]

In 92% by mass of polycrystalline $LiNi_{0.6}Co_{0.2}Mn_{0.2}O_2$ powder (product number: M1-C) manufactured by BTR, 4% by mass of PVDF was mixed as a binder, 3% by mass of acetylene black and 1% by mass of vapor-grown carbon nanofiber (VGCF (registered trademark)-H manufactured by Resonac Corporation) were mixed as a conductive aid, and N-methylpyrrolidone was further added to form a paste. The paste was applied to both sides of an aluminum foil, followed by drying to form a positive electrode active material layer, which was used as a test positive electrode body.

[Production of Negative Electrode]

In 90% by mass of natural graphite powder (product number: BFC-P) manufactured by BTR, 10% by mass of PVDF was mixed as a binder, and N-methylpyrrolidone was further added to form a slurry. The slurry was applied to one side of a copper foil, followed by drying at 150°C for 12 hours to form a negative electrode active material layer, which was used as a test negative electrode body.

[Production of Lithium Ion Secondary Battery]

<Example 1>

Under an argon atmosphere at a dew point of -50°C or lower, a terminal was welded to the above single crystal positive electrode, and both sides of the welded product were then sandwiched between two polyethylene separators. The outside of the sandwiched product was then sandwiched between two of the above natural graphite negative electrodes to which a terminal had been welded in advance so that a surface of the negative electrode active material faces a surface of the positive electrode active material. The resultant product was put in an aluminum laminated bag having an opening on one side, the above electrolyte solution 1A-2 was vacuum-injected into the bag, and the opening was then sealed with heat to produce an aluminum laminated 50 mAh nonaqueous electrolyte solution battery according to Example 1.

<Examples 2 to 12 and Comparative Examples 1 to 13>

Lithium ion secondary batteries were produced in the same manner as in Example 1, except that the type of electrolyte solution and the type of test positive electrode body were changed as shown in Tables 2 and 3.

In Examples 2 to 12 and Comparative Example 1, the above single crystal NCM622 positive electrode was used as the test positive electrode body, and in Comparative Examples 2 to 13, the above polycrystalline NCM622 positive electrode was used as the test positive electrode body.

[Evaluation]

The following evaluations were performed on the obtained test positive electrode bodies and lithium ion secondary batteries.

[Low-Temperature (0°C) Rate Performance]

The above lithium ion secondary batteries were used, and a charge and discharge test was performed at an environmental temperature of 0°C to evaluate the high rate performance. The battery was charged to 4.4 V, was maintained at 4.4 V for 30 minutes, and then was discharged to 3.0 V. The discharge was always performed at a current rate of 0.2 C, a maximum current rate of the charge was 1.0 C, and data was measured at five points of 0.2 C, 0.35 C, 0.5 C, 0.75 C, and 1.0 C. Results are shown in Tables 2 and 3. Values in the tables are results at 1.0 C, and are expressed as relative values with a charge capacity of Comparative Example 1 set to 100.

[Cycle Characteristic under Severe Conditions]

The above lithium ion secondary batteries were used, and the charge and discharge test was performed at an environmental temperature of 60°C to evaluate the cycle characteristic. Both charge and discharge were performed at a current rate of 2 C, and the battery was charged to 4.5 V, was maintained at 4.5 V for 1 hour, and then discharged to 3.0 V, and a charge and discharge cycle was repeated. A degree of deterioration of the cell was evaluated with a discharge capacity retention rate after 500 cycles (also referred to as "evaluation of high-temperature cycle characteristic"). The discharge capacity retention rate was calculated using the following formula. A discharge capacity of the first cycle in the charge and discharge test at the environmental temperature of 60°C was defined as an initial discharge capacity.

<Discharge Capacity Retention Rate after 500 Cycles>

$$\text{Discharge capacity retention rate (\%)} = (\text{discharge capacity after 500 cycles/initial discharge capacity}) \times 100$$

Results are shown in Tables 2 and 3. In each table, the discharge capacity retention rate is expressed as a relative value with the discharge capacity retention rate of Comparative Example 1 set to 100.

[FE-SEM Analysis of Test Positive Electrode Body]

A surface of the positive electrode active material layer of the test positive electrode body was analyzed with a scanning electron microscope (SEM). The observation was performed at 5,000 × magnification with a S-4500 scanning electron microscope by Hitachi, Ltd. under a high vacuum environment of $2.0 \times 10^{-6}$ Pa.

An SEM image of the positive electrode body of Comparative Example 2 is shown in FIG. 1, and an SEM image of

the positive electrode body of Example 1 is shown in FIG. 2.

(Particle Size of Primary Particle)

A particle size of the primary particles was obtained by performing the observation at 5,000 × magnification by using the above SEM. Specifically, 30 particles are selected from a field of view of an electron microscope photograph, a particle shape is approximated to a circle, a major axis diameter thereof is measured visually, and an average value thereof is calculated.

[Measurement of Surface Roughness (Ra) of Test Positive Electrode Body]

According to the procedure described in JIS B 0633, the surface roughness of the surface of the positive electrode active material layer of the test positive electrode body was measured using a stylus profilometer (Dektak 8 manufactured by Veeco Instruments Inc.).

[Evaluation Results]

(Test Positive Electrode Body)

·FE-SEM Analysis

As shown in FIG. 2, in the test positive electrode body used in the nonaqueous electrolyte solution battery according to Example 1, the positive electrode active material exists as primary particles having a particle size of several μm, and becomes a single crystal positive electrode made of a monolithic material. On the other hand, in the test positive electrode body used in the nonaqueous electrolyte solution battery according to Comparative Example 2, as shown in FIG. 1, the positive electrode active material forms secondary particles having a particle size of several μm by aggregating the primary particles having a particle size of several hundred nm and becomes a polycrystalline positive electrode which is not a monolithic material.

·Surface Roughness (Ra)

The surface roughness of the surface of the positive electrode active material layer of the test positive electrode body (single crystal NCM622 positive electrode) used in each of the lithium ion secondary batteries according to Example 1 and Comparative Example 1 in the as-prepared state was 2061 Å. The surface roughness of the test positive electrode body (polycrystalline NCM622 positive electrode) used in each of the lithium ion secondary batteries according to Comparative Example 2 and Comparative Example 5 in the as-prepared state was 14975 Å.
Accordingly, it was confirmed that the polycrystalline positive electrode had a surface roughness an order of magnitude larger than that of the single crystal positive electrode, indicating that the surface of the polycrystalline positive electrode is significantly rougher. It can be said that this is correlated with a matter that the polycrystalline positive electrode has more voids on the surface than the single crystal positive electrode, as seen in the SEM observation images (FIGS. 1 and 2).

(Lithium Ion Secondary Battery)

Table 2 shows the high-temperature cycle characteristics of the nonaqueous electrolyte batteries of the configurations of Example 1 and Comparative Examples 1, 2, and 5, and Table 2 and FIG. 3 show the low-temperature (0°C) rate performance.
FIG. 3 is a graph showing the low-temperature (0°C) rate performance in each of the above Examples and Comparative Examples, and plots relative values of the charge capacity at 0.35 C, 0.5 C, 0.75 C, and 1.0 C when the charge capacity at 0.2 C in each example is set to 100%.
It was confirmed that, compared to Comparative Example 1 using the positive electrode having the surface roughness of the positive electrode active material layer of less than $1.0 \times 10^4$ Å and using the electrolyte solution 1A-1 not containing at least one selected from the group consisting of the compounds of Formulas (1) to (10) (that is, (I)), in Example 1 using the electrolyte solution 1A-2 containing (I), the low-temperature rate performance and the high-temperature cycle characteristic were significantly improved.
When the positive electrode having the surface roughness of the positive electrode active material layer of not less than $1.0 \times 10^4$ Å was used, compared to Comparative Example 5 using the electrolyte solution 1A-1, in Comparative Example 2 using the electrolyte solution 1A-2, the low-temperature rate performance was improved, but in both cases, the

high-temperature cycle characteristics were significantly inferior to those of Example 1.

The same tendency was observed in Examples 2 and 3 and Comparative Examples 3 and 4 in which the contents of (I) were increased to 0.8% by mass and 1.0% by mass.

The results of Comparative Examples 2 to 4 showed that, when the polycrystalline positive electrode was used, the effect of improving the low-temperature rate performance and improving the high-temperature cycle characteristics due to the addition of (I) were maximized when the amounts of (I) were 0.5% by mass and 0.8% by mass, respectively. In contrast, the results of Examples 1 to 3 showed that, when the single crystal positive electrode was used, a maximum point was not yet observed when the added amounts of (I) were 0.5 to 1.0% by mass. Therefore, when the single crystal positive electrode was used, the effect of adding (I) was obtained.

As shown in Table 3, when a plurality of compounds were contained as (I) and the types of the compounds were changed, and when the type or presence or absence of (IV) was changed, the tendency was similar to that described above.

Table 2

| | Electrolyte solution No. | Positive electrode active material | Negative electrode active material | Low-temperature rate performance*) (0°C, 1 C) | High-temperature cycle characteristic*) (60°C, 2 C, 500 cycles) |
|---|---|---|---|---|---|
| Example 1 | 1A-2 | Single crystal NCN622 | Natural graphite | 109.6 | 129.6 |
| Example 2 | 1A-3 | Single crystal NCN622 | Natural graphite | 110.8 | 132.6 |
| Example 3 | 1A-4 | Single crystal NCN622 | Natural graphite | 111.2 | 132.7 |
| Comparative Example 1 | 1A-1 | Single crystal NCN622 | Natural graphite | 100 | 100 |
| Comparative Example 2 | 1A-2 | Polycrystalline NCM622 | Natural graphite | 110.1 | 112.1 |
| Comparative Example 3 | 1A-3 | Polycrystalline NCM622 | Natural graphite | 109.8 | 120.6 |
| Comparative Example 4 | 1A-4 | Polycrystalline NCM622 | Natural graphite | 109.6 | 118.4 |
| Comparative Example 5 | 1A-1 | Polycrystalline NCM622 | Natural graphite | 103.2 | 96.4 |
| *) Relative comparison when Comparative Example 1 is set to 100 | | | | | |

Table 3

| | Electrolyte solution No. | Positive electrode active material | Negative electrode active material | Low-temperature rate performance*) (0°C, 1 C) | High-temperature cycle characteristic*) (60°C, 2 C, 500 cycles) |
|---|---|---|---|---|---|
| Example 4 | 1A-5 | Single crystal NCM622 | Natural graphite | 110.3 | 132.5 |
| Example 5 | 1A-6 | Single crystal NCM622 | Natural graphite | 110.1 | 130.1 |
| Example 6 | 1A-7 | Single crystal NCM622 | Natural graphite | 107.9 | 129.4 |
| Example 7 | 1A-8 | Single crystal NCM622 | Natural graphite | 106.4 | 131.2 |
| Example 8 | 1A-9 | Single crystal NCM622 | Natural graphite | 106.5 | 127.8 |
| Example 9 | 1A-10 | Single crystal NCM622 | Natural graphite | 107.2 | 131.5 |
| Example 10 | 1A-11 | Single crystal NCM622 | Natural graphite | 110.6 | 129.8 |
| Example 11 | 1A-12 | Single crystal NCM622 | Natural graphite | 107.5 | 128.3 |
| Comparative Example 1 | 1A-1 | Single crystal NCM622 | Natural graphite | 100 | 100 |

(continued)

| | Electrolyte solution No. | Positive electrode active material | Negative electrode active material | Low-temperature rate performance*) (0°C, 1 C) | High-temperature cycle characteristic*) (60°C, 2 C, 500 cycles) |
|---|---|---|---|---|---|
| Comparative Example 6 | 1A-5 | Polycrystalline NCM622 | Natural graphite | 109.8 | 120.6 |
| Comparative Example 7 | 1A-6 | | | 109.6 | 118.4 |
| Comparative Example 8 | 1A-7 | | | 107.4 | 117.6 |
| Comparative Example 9 | 1A-8 | | | 106.9 | 119.4 |
| Comparative Example 10 | 1A-9 | | | 106.1 | 117.1 |
| Comparative Example 11 | 1A-10 | | | 106.7 | 119.7 |
| Comparative Example 12 | 1A-11 | | | 109.3 | 120.5 |
| Comparative Example 13 | 1A-12 | | | 107.0 | 118.7 |
| *) Relative comparison when Comparative Example 1 is set to 100 | | | | | |

INDUSTRIAL APPLICABILITY

According to the present disclosure, a lithium ion secondary battery that has a good cycle characteristic under severe conditions (for example, a high-temperature condition exceeding 50°C) and can prevent decrease in rate performance at a low temperature (0°C) can be provided.

Although the present disclosure has been described in detail and with reference to specific examples, it will be apparent to those skilled in the art that various changes and modifications can be made without departing from the spirit and scope of the present disclosure.

The present application is based on a Japanese Patent Application (No. 2022-135417) filed on August 26, 2022, the contents of which are incorporated herein by reference.

## Claims

1. A lithium ion secondary battery, wherein

surface roughness (Ra) of a surface of a positive electrode active material layer comprising a positive electrode active material is less than $1.0 \times 10^4$ Å, and
the lithium ion secondary battery comprises a nonaqueous electrolyte solution containing at least one selected from the group consisting of compounds of the following Formulas (1) to (10),

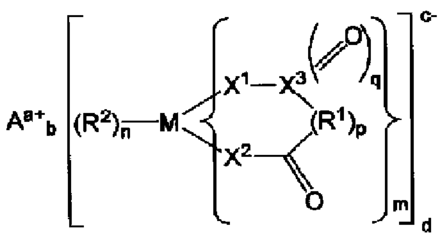

(1)

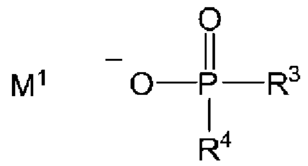

(2)

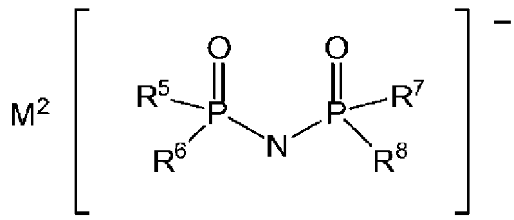

(3)

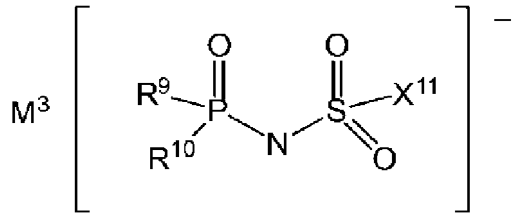

(4)

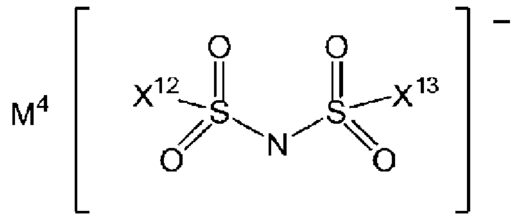

(5)

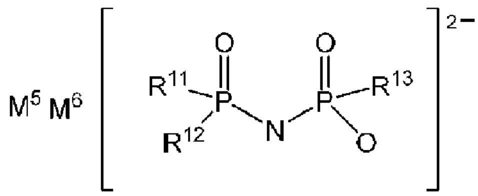

(6)

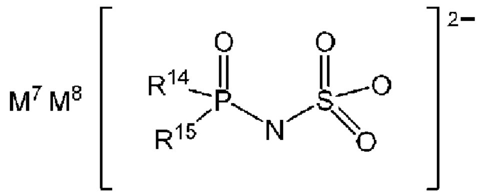

(7)

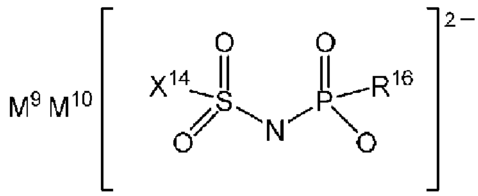

(8)

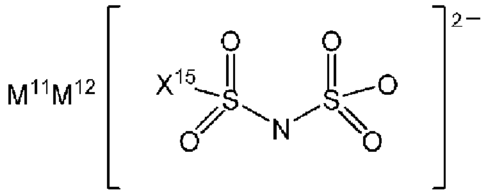

(9)

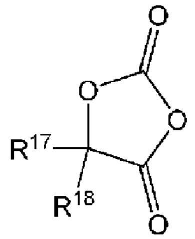

(10)

in Formula (1), M represents a boron atom, a phosphorus atom, or a silicon atom, m is 1 or 2;

n is 2 or 4;

p is 0 or 1;

when p is 0, $R^1$ does not exist, and $X^3$ and the carbonyl group described on adjacent sides of $R^1$ are directly bonded;

$R^1$ represents an alkylene group having 1 to 10 carbon atoms, a halogenated alkylene group having 1 to 10 carbon atoms, an alkenylene group having 2 to 10 carbon atoms, a halogenated alkenylene group having 2 to 10 carbon atoms, an arylene group having 6 to 20 carbon atoms, or a halogenated arylene group having 6 to 20 carbon atoms (these groups may contain a substituent or a heteroatom in structures, and when m is 2 or more, m of $R^1$'s may be bonded to each other);

$R^2$ represents a halogen atom;

$X^1$ and $X^2$ each independently represent an oxygen atom or a sulfur atom, and $X^3$ represents a carbon atom or a sulfur atom;

q is 1 when $X^3$ is the carbon atom, and is 1 or 2 when $X^3$ is the sulfur atom;

$A^{a+}$ represents an alkali metal cation, an alkaline earth metal cation, or an onium cation; and

a represents a valence number of the corresponding cation, and each of a, b, c, and d is 1 or 2, and satisfies $a \times b = c \times d$,

in Formulas (2) to (4) and (6) to (8), $R^3$ to $R^{16}$ each independently represent a fluorine atom or an organic group selected from a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and the organic group may contain a fluorine atom, an oxygen atom, or an unsaturated bond,

in Formulas (4), (5), (8), and (9), $X^{11}$ to $X^{15}$ each independently represent a fluorine atom or an organic group selected from a linear or branched alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and the organic group may contain a fluorine atom, an oxygen atom, or an unsaturated bond,

each of Formulas (2) to (9) includes at least one bond selected from the group consisting of a P-F bond and an S-F bond, and in Formulas (2) to (9), $M^1$ to $M^{12}$ each independently represent a proton, a metal cation, or an onium cation, and

in Formula (10), $R^{17}$ to $R^{18}$ each independently represent a hydrogen atom, a fluorine atom, or an organic group selected from a linear or branched alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, a linear or branched alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and the organic group may contain a fluorine atom, an oxygen atom, or an unsaturated bond.

2. The lithium ion secondary battery according to claim 1, wherein the nonaqueous electrolyte solution further comprises at least one selected from the group consisting of a cyclic carbonate compound, a Si-containing compound, and a sulfate ester compound.

3. The lithium ion secondary battery according to claim 1 or 2, wherein a total content of the at least one selected from the group consisting of the compounds of Formulas (1) to (10) is 0.001 to 10% by mass with respect to a total amount of the nonaqueous electrolyte solution.

4. The lithium ion secondary battery according to claim 1 or 2, wherein, when the surface of the positive electrode active material layer is observed with an electron microscope at 5,000× magnification, the primary particles of the positive electrode active material constitute 70% or more of the number of particles in a field of view of 17,000 nm × 23,000 nm.

5. The lithium ion secondary battery according to claim 4, wherein the primary particles include a primary particle having a particle size range of 7 to 12 μm and a primary particle having a particle size range of 1 μm or more and less than 7 μm.

6. The lithium ion secondary battery according to claim 1 or 2, wherein the positive electrode active material is a lithium-containing transition metal composite oxide.

7. The lithium ion secondary battery according to claim 6, wherein the lithium-containing transition metal composite oxide contains at least one of nickel, cobalt, and manganese.

8. The lithium ion secondary battery according to claim 1 or 2, wherein a charge potential is 4.4 V or more.

9. The lithium ion secondary battery according to claim 1 or 2, wherein the positive electrode active material layer further comprises a conductive aid and a binder.

FIG. 1

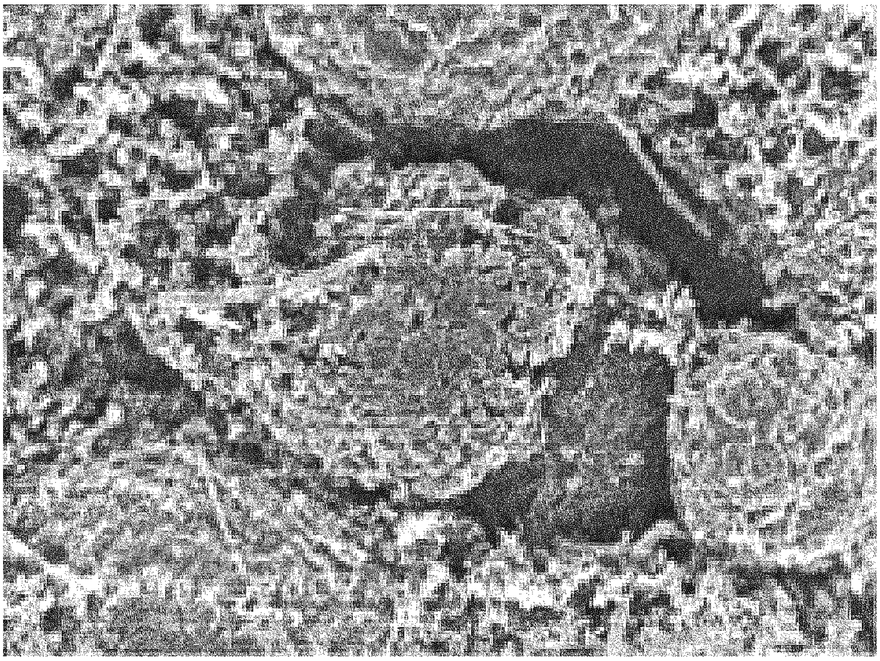

FIG. 2

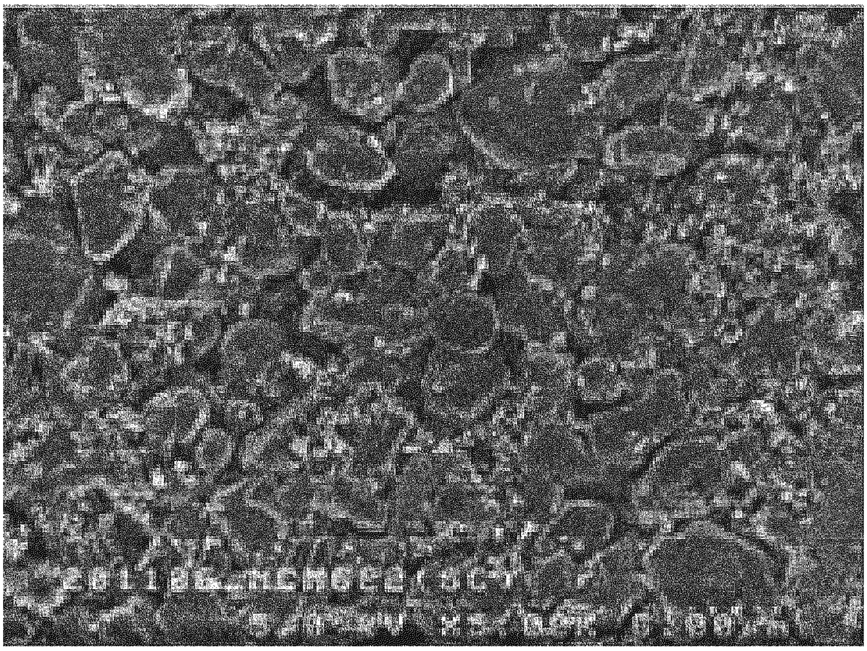

FIG. 3

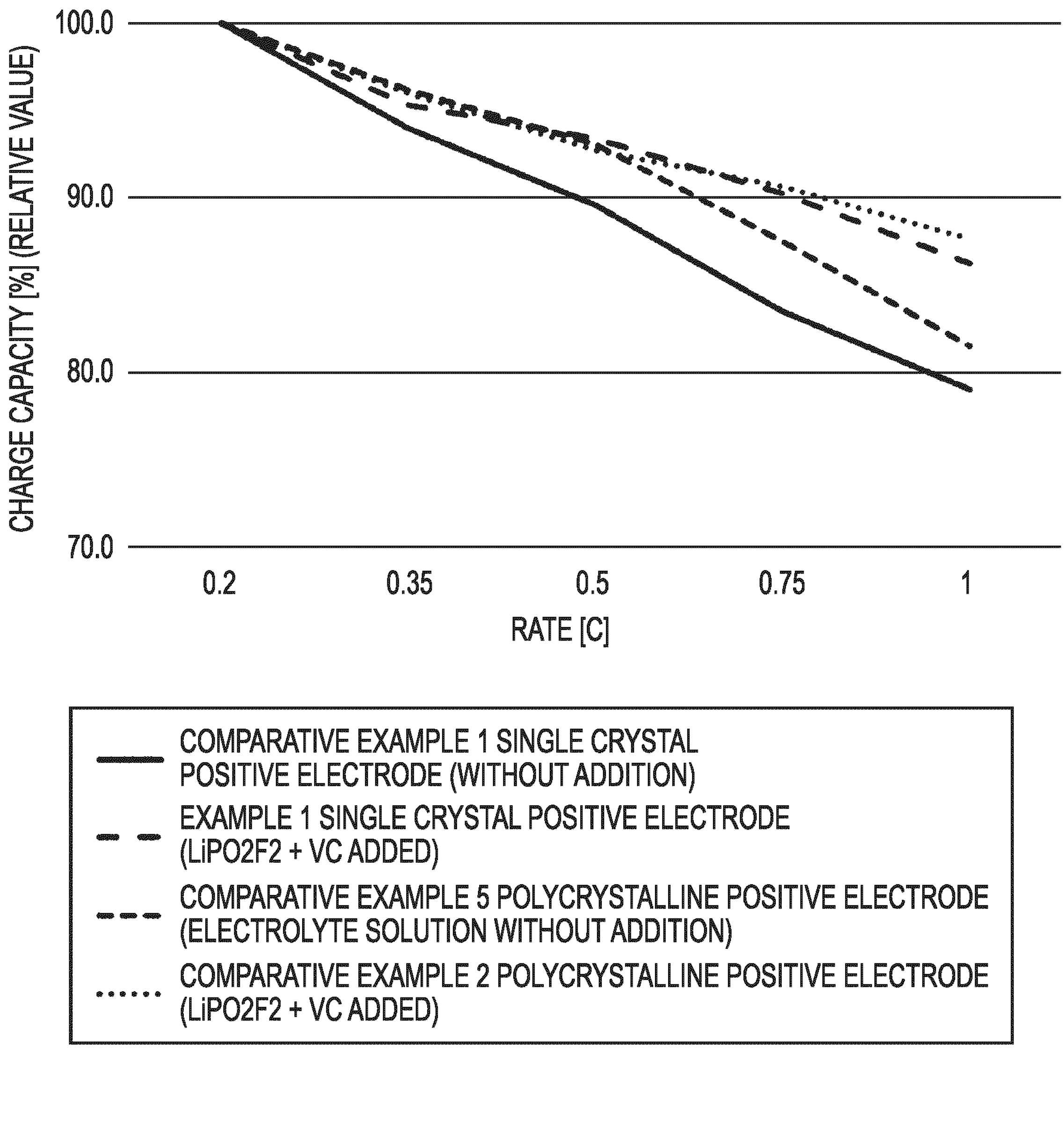
100.0
90.0
80.0
70.0
CHARGE CAPACITY [%] (RELATIVE VALUE)
0.2
0.35
0.5
0.75
1
RATE [C]
COMPARATIVE EXAMPLE 1 SINGLE CRYSTAL POSITIVE ELECTRODE (WITHOUT ADDITION)
EXAMPLE 1 SINGLE CRYSTAL POSITIVE ELECTRODE (LiPO2F2 + VC ADDED)
COMPARATIVE EXAMPLE 5 POLYCRYSTALLINE POSITIVE ELECTRODE (ELECTROLYTE SOLUTION WITHOUT ADDITION)
COMPARATIVE EXAMPLE 2 POLYCRYSTALLINE POSITIVE ELECTRODE (LiPO2F2 + VC ADDED)

**INTERNATIONAL SEARCH REPORT**

International application No.
**PCT/JP2023/030786**

**A. CLASSIFICATION OF SUBJECT MATTER**

***H01M 10/0567***(2010.01)i; ***H01M 4/131***(2010.01)i; ***H01M 4/505***(2010.01)i; ***H01M 4/525***(2010.01)i; ***H01M 10/052***(2010.01)i; ***H01M 10/0525***(2010.01)i
FI: H01M10/0567; H01M4/131; H01M4/505; H01M4/525; H01M10/052; H01M10/0525

According to International Patent Classification (IPC) or to both national classification and IPC

**B. FIELDS SEARCHED**

Minimum documentation searched (classification system followed by classification symbols)

H01M10/0567; H01M4/131; H01M4/505; H01M4/525; H01M10/052; H01M10/0525

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2021-101432 A (MITSUI CHEMICALS INC) 08 July 2021 (2021-07-08)<br>example 3-2 | 1-4, 6-9<br>5 |
| A | JP 2021-508410 A (UMICORE) 04 March 2021 (2021-03-04) | 1-9 |
| A | JP 2007-165125 A (CENTRAL GLASS CO LTD) 28 June 2007 (2007-06-28) | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/030786**

**Box No. III Observations where unity of invention is lacking (Continuation of item 3 of first sheet)**

This International Searching Authority found multiple inventions in this international application, as follows:

The invention in claims 1-9 (an aspect in which the compound represented by general formula (1) is selected) does not have a special technical feature in light of the disclosures of JP 2021-101432 (hereinafter, referred to as a "document 1", see in particular example 3-2).

Claims 1-9 (an aspect in which the compound represented by general formulas (2)-(10) are respectively selected) share, with claim 1 (an aspect in which the compound represented by general formula (1) is selected), the common technical feature of a "lithium-ion secondary battery containing a non-aqueous electrolyte," "wherein a surface roughness (Ra) of the anode active material layer containing the cathode active material is less than $1.0\times10^4$ Å." However, said technical feature does not make a contribution over the prior art in light of the disclosures of documents 1-5 and thus cannot be said to be a special technical feature. Also, there are no other same or corresponding special technical features between these inventions.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-9 (an aspect in which the compound represented by general formula (1) is selected)**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/JP2023/030786**

| Patent document cited in search report | Publication date (day/month/year) | Patent family member(s) | Publication date (day/month/year) |
|---|---|---|---|
| JP 2021-101432 A | 08 July 2021 | (Family: none) | |
| JP 2021-508410 A | 04 March 2021 | US 2021/0119204 A1<br>WO 2019/120973 A1<br>EP 3728129 A1<br>KR 10-2020-0106043 A<br>CN 111615496 A | |
| JP 2007-165125 A | 28 June 2007 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021507486 A
- JP 2021508410 A